(19) Europäisches Patentamt
European Patent Office
Office européen des brevets

(11) EP 2 778 189 A1

(12) **EUROPÄISCHE PATENTANMELDUNG**

(43) Veröffentlichungstag:
**17.09.2014 Patentblatt 2014/38**

(51) Int Cl.:
***C08G 67/02*** (2006.01)

(21) Anmeldenummer: **14158593.5**

(22) Anmeldetag: **10.03.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.03.2013 EP 13158810**

(71) Anmelder: **Bayer MaterialScience AG**
**51368 Leverkusen (DE)**

(72) Erfinder:
- **Müller, Thomas Ernst**
**52062 Aachen (DE)**
- **Gürtler, Christoph**
**50735 Köln (DE)**
- **Leitner, Walter**
**52074 Aachen (DE)**
- **Vogt, Henning**
**52062 Aachen (DE)**
- **Soomro, Saeda**
**34128 Kassel (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(54) **Semi-batch Verfahren zur Herstellung von Olefin-CO-Copolymeren**

(57) Ein Verfahren zur Herstellung von Olefin-CO-Copolymeren umfasst die Schritte:
- Bereitstellen eines Reaktors;
- Beaufschlagen des Reaktors mit einem gasförmigen Olefin und mit CO, so dass im Reaktor ein erster Druck p1 herrscht;
- Reaktion von Olefin mit CO in Gegenwart eines Katalysators im Reaktor.

Vor der Reaktion liegt im Reaktor entweder kein CO vor oder das Volumenverhältnis von gasförmigem Olefin zu CO ist ≥ 90:10. Während der Reaktion werden zumindest zeitweise gasförmiges Olefin und CO zudosiert, wobei das Volumenverhältnis von zudosiertem Olefin zu zudosiertem CO hierbei im zeitlichen Mittel ≥ 90:10 ist.

EP 2 778 189 A1

## Beschreibung

Die vorliegende Erfindung betrifft ein spezielles Verfahren zur Herstellung von Olefin-CO-Copolymeren in Gegenwart eines Katalysators, wobei während der Copolymerisationsreaktion Olefin und CO der Reaktion zudosiert werden. Gegenstand dieser Erfindung sind weiterhin Olefin-CO-Copolymere, die nach diesem Verfahren erhalten werden, sowie deren Anwendung als Kunststoff-Additive oder -Vernetzer, in Pulverlacken, als Bindemittel bzw. nach Reduktion bzw. reduktiver Aminierung als Quervernetzer für Polyurethane.

Ein weiterer Gegenstand dieser Erfindung sind Polyalkohole und Polyamine bzw. Polyamin-Polyalkohole, die aus den erfindungsgemäßen Olefin-CO-Copolymeren erhältlich sind, sowie deren Anwendung als Polymeradditive und/oder zur Herstellung von Polyurethan- und/oder Polyharnstoffpolymeren.

Olefin-CO-Copolymere (im Rahmen der Erfindung auch austauschbar als "Polyketone" bezeichnet) sind vielseitig einsetzbar, zum Beispiel als Weichmacher für PVC oder als Vernetzer. Bei letzterem reagiert die Carbonylgruppe mit CH-aciden Verbindungen in Aldolreaktionen oder mit Aminen oder Hydrazinderivaten zu Azomethinen. Zur Carbonylgruppe benachbart stehende CH-acide Gruppen können auch mit anderen Carbonylkomponenten reagieren.

Unter reduktiven Bedingungen, z.B. durch Hydrierung mit Wasserstoff an heterogenen Metallkatalysatoren, können aus den Olefin-CO-Copolymeren Polyalkohole erhalten werden, welche ebenfalls vielfältige Anwendungen finden, z.B. ebenfalls als PVC-Weichmacher, oder als Quervernetzer für Polyurethane.

Weiterhin können durch Umsetzung mit Hydroxylamin oder Ammoniak und anschließende Reduktion, z.B. Hydrierung mit Wasserstoff an heterogenen Metallkatalysatoren, Polyamine erhalten werden, welche ihrerseits als Quervernetzer für Polyurethane dienen können.

Für alle Anwendungen ist aus verschiedenen Gründen ist eine geringe Dichte an Carbonylgruppen innerhalb der Polymerkette wünschenswert. Diese Dichte lässt sich ausdrücken durch den molaren CO-Gehalt im Molekül. Bei einem CO-Gehalt von nahe 50 mol-% liegt ein weitestgehend alternierendes Olefin-CO-Copolymer vor. Alternierende Olefin-CO-Copolymere mit einem CO-Gehalt von 50 mol-% weisen einen hohen Schmelzpunkt von ca. 257 °C auf. Dies erfordert Verarbeitungstemperaturen von über 280 °C, bei denen üblicherweise Zersetzungserscheinungen und/oder Verfärbungen auftreten (siehe EP 0 213 671). Bei einem hohen CO-Gehalt ist die Wahrscheinlichkeit erhöht, dass bei hohen Temperaturen und/oder unter Chemikalieneinfluss verstärkt Aldolreaktionen auftreten, die zu einer Quervernetzung des Polymers führen. Unter Sauerstoff- und/oder UV-Einwirkung tritt bei Olefin-CO-Copolymeren mit hohem CO-Gehalt ein verstärkter Abbau der Polymerketten auf. Aus diesem Grund sollte für die oben genannten Anwendungen der CO-Gehalt in Olefin-CO-Copolymeren unterhalb von 5 mol-% liegen.

Ein hoher CO-Gehalt begünstigt zudem ein erhöhtes Aufkommen an "alternierenden" Einheiten der Struktur $-CO-C_2H_{4-n}R_n-CO-$. In diesem Zusammenhang bedeutet "alternierend", dass zwischen zwei CO-Gruppen in der Polymerkette lediglich eine Alkenyl-Einheit $C_2H_{4-n}R_n$ vorliegt, wobei $n \geq 1$ und $\leq 4$ ist und R Wasserstoff oder Alkylreste bezeichnet und verschiedene R sich innerhalb einer Einheit $C_2H_{4-n}R_n$ und zwischen verschiedenen Einheiten $C_2H_{4-n}R_n$ unterscheiden können und/oder innerhalb einer Einheit $C_2H_{4-n}R_n$ zwei oder mehrere R so miteinander verknüpft sind, dass sie bi-, tri- oder polycyclische Systeme ausbilden. Der Gehalt an alternierenden Einheiten kann ausgedrückt werden durch den "alternierenden Anteil", also den molaren Anteil an Abschnitten $-CO-C_2H_{4-n}R_n-CO-$, in denen genau eine Alkenyl-Einheit $C_2H_{4-n}R_n$ beidseitig an je eine CO-Gruppe gebunden ist, bezogen auf die Gesamtmenge aller Abschnitte $CO-(C_2H_{4-n}R_n)_x-CO$ und $CO-(C_2H_{4-n}R_n)_y-EG$, wobei x, y ≥ 1 und EG für eine Endgruppe steht. Dieser "alternierende Anteil" kann ausgedrückt werden durch den Anteil an Kohlenstoffatomen, die innerhalb alternierender $CO-C_2H_{4-n}R_n-CO$-Abschnitte direkt an eine CO-Gruppe gebunden sind, an der Gesamtmenge aller Kohlenstoffatome, welche direkt an eine CO-Gruppe gebunden sind. Dieser "alternierende Anteil" kann beispielsweise NMR-spektroskopisch bestimmt werden.

Alternierende $CO-C_2H_{4-n}R_n-CO$-Abschnitte führen bei der katalytischen Hydrierung leicht zu zyklischen Oxolan-Einheiten, die die Hydroxy-Funktionalität des Produktes herabsetzen und einen Kettenabbau erleichtern. In ähnlicher Weise führen die alternierenden $CO-C_2H_{4-n}R_n-CO$-Einheiten bei der reduktiven Aminierung zu zyklischen Pyrrolidin-Einheiten und wirken sich somit negativ auf das Verhältnis von primären zu sekundären Aminen aus, welches für Anwendungen im PolyurethanBereich möglichst hoch sein sollte. Aus diesen Gründen sollte der Anteil an alternierenden $CO-C_2H_{4n}R_n-CO$-Abschnitten (alternierender Anteil) möglichst gering ausfallen.

Für Anwendungen im Polyurethanbereich, beispielsweise als Quervernetzer nach Hydrierung zum entsprechenden Polyalkohol oder nach reduktiver Aminierung zum entsprechenden Polyamin oder Polyamin-Polyalkohol, wäre weiterhin ein zahlenmittleres Molekulargewicht ≤ 15000 g/mol wünschenswert.

Weiterhin wäre für die oben genannten Anwendungen eine geringe Teilkristallinität wünschenswert um eine ausreichende Reaktivität der in der Polymerkette enthaltenen Carbonylgruppen sicherzustellen.

In EP 0 632 084 wird ein katalytisches Batch-Verfahren beschrieben, nach welchem unter Einsatz eines Katalysators, der *in situ* aus Palladiumacetat und einem Phosphin-Sulfonat-Liganden generiert wurde, nicht vollständig alternierende Olefin-CO-Copolymere erhalten werden. "Batch-Verfahren" bedeutet, dass die Copolymerisation ohne Zudosieren von Reaktanden, insbesondere Ethylen und/oder CO, zur laufenden Reaktion durchgeführt wird. Die höchste

Turnover-Frequenz (TOF, ausgedrückt in erhaltenen g Polymer pro mmol Katalysator pro Stunde) beträgt 3,5 g/(mmol$_{Pd}$×h). Der geringste CO-Gehalt in einem Ethylen-CO-Copolymer wurde mit 42,5 mol-% CO aufgeführt. Damit beträgt der nicht-alternierende Anteil maximal 15 mol-% und der alternierende Anteil mindestens 85 mol-%. Das entsprechende Produkt weist einen Schmelzpunkt von 210 °C auf. Über das Molekulargewicht wird keine Aussage getroffen.

In Chem. Commun. 2002, 964 wird ein Batch-Verfahren beschrieben, nach dem in Anwesenheit des gleichen Katalysators Ethylen-CO-Copolymere mit einem CO-Gehalt von mindestens 40,85 mol-% CO erhalten wurden. Damit beträgt der nicht-alternierende Anteil maximal 18,3 mol-% und der alternierende Anteil mindestens 81,7 mol-%. Die TOF in diesem Fall betrug 108 g/(mmol$_{Pd}$×h). Die höchste TOF wurde mit 190 g/(mmol$_{Pd}$×h) für ein Ethylen-CO-Copolymer mit 48,8 mol-% CO erreicht. Alle erhaltenen Produkte weisen Molekulargewichte ≥ 30000 g/mol auf.

In Organometallics 2009(24), 6994 wird ein Batch-Verfahren basierend auf dem gleichen Katalysator beschrieben, in welchem Ethylen-CO-Copolymere mit CO-Gehalten zwischen 6 und 32 mol-% erhalten wurden. Obwohl in Figur 3 ein Polymer mit 1 mol-% CO aufgeführt wird, ist dieses weder im Text noch den Supporting Information beschrieben. Auch für die beschriebenen Produkte mit einem CO-Gehalt ≥ 6 mol-% werden keine genaueren Angaben bezüglich des alternierenden Anteils gemacht. Die höchste TOF beträgt 4,94 g/(mmol$_{Pd}$×h). Für ein Ethylen-CO-Copolymer mit einem CO-Gehalt von 10 mol-% wurde per GPC gegen Polystyrol-Standards ein zahlenmittleres Molekulargewicht von 4460 g/mol gemessen. Da die Turnover Number (TON) in diesem Beispiel 3270 g/mol$_{Pd}$ beträgt, ist davon auszugehen, dass das geringe Molekulargewicht aus der geringen TON resultiert und eine Molekulargewichtskontrolle bei höheren Umsätzen nicht möglich ist.

Ethylen-CO-Copolymere mit einem CO-Gehalt unterhalb 5 mol-% und einem alternierenden Anteil unterhalb 32,5% sind nach den oben beschriebenen Verfahren nicht zugänglich. Aus dem Vergleich der in der oben angeführten Literatur beschriebenen Ergebnisse geht weiterhin hervor, dass bei der Verwendung des *in situ*-generierten Palladium-Katalysators im Batch-Verfahren eine Absenkung des CO-Gehaltes in Ethylen-CO-Copolymeren mit einer Absenkung der TOF einhergeht. Für Ethylen-CO-Copolymere mit einem CO-Gehalt ≤ 5 mol-% wäre daher nach diesem Verfahren eine weitere Absenkung der TOF auf einen Wert < 4,94 g/(mmol$_{Pd}$×h) zu erwarten. Aufgrund der niedrigen TOF sind diese Verfahren daher für eine industrielle Anwendung unattraktiv.

Die Verwendung eines isolierten Komplexkatalysators zur Herstellung von Ethylen-CO-Copolymeren mit einem CO-Gehalt von mindestens 35,2 mol-% wird in Organometallics 2005(24), 2755 beschrieben. Damit beträgt der nicht-alternierende Anteil maximal 29,2 mol-% und der alternierende Anteil mindestens 70,4 mol-%. Das entsprechende Produkt wurde mit einer TOF von 134 g/(mmol$_{Pd}$×h) erhalten. Die höchste TOF wurde mit 292 g/(mmol$_{Pd}$×h) für ein Ethylen-CO-Copolymer mit 48,45 mol-% CO erreicht. Für ein Ethylen-CO-Polymer enthaltend 36,8 mol-% CO wurde nach Fraktionierung per GPC gegen PMMA-Standards ein zahlenmittleres Molekulargewicht > 300000 g/mol bestimmt.

Auch nach dem hier beschriebenen Verfahren sind Ethylen-CO-Copolymere mit einem CO-Gehalt unterhalb 5 mol-% und einem alternierenden Anteil unterhalb 32,5% nicht zugänglich. Der Vergleich der erzielten Ergebnisse zeigt, dass auch hier eine Absenkung des CO-Gehaltes in Ethylen-CO-Copolymeren mit einer Absenkung der TOF einhergeht. Die erhaltenen Molekulargewichte weisen starke Schwankungen auf und betragen typischerweise > 15000 g/mol.

Olefin-CO-Copolymere, die durch radikalische Polymerisation erhalten wurden, sind beispielsweise in US 2495286, GB 1522942, US 2008/0242895 u. a. beschrieben. Dem Fachmann ist jedoch bekannt, dass die auf radikalischem Wege erhaltenen Copolymere sich aufgrund eines höheren Verzweigungsgrades strukturell grundsätzlich von den in dieser Erfindung auf katalytischem Wege erhaltenen größtenteils linearen Olefin-CO-Copolymeren unterscheiden. Der Verzweigungsgrad kann beispielsweise NMR-spektroskopisch bestimmt und als durchschnittliche Anzahl verzweigender (also mindestens dreifach substituierter) C-Atome pro 1000 im Polymer enthaltener C-Atome angegeben werden. Dem Fachmann ist bekannt, dass ein erhöhter Verzweigungsgrad zu erhöhten Schmelzviskositäten führt und damit die Verarbeitung im geschmolzenen Zustand erschwert. Für die eingangs erwähnten Anwendungen wären daher Olefin-CO-Coplymere mit einem geringen Verzweigungsgrad wünschenswert.

Weiterhin erfordert der Einsatz von potenziell explosiven Radikalstartern in radikalischen Polymerisationsverfahren erhöhte Vorsichtsmaßnahmen, welche eine technische Anwendung erschweren.

Aus den oben genannten Veröffentlichungen geht hervor, dass kein katalytisches Verfahren bekannt ist, mit dem Olefin-CO-Copolymere mit einem CO-Gehalt unterhalb von 5 mol-% und einem alternierenden Anteil unterhalb von 32,5 mol-% hergestellt werden können. Die vorliegende Erfindung hat sich daher die Aufgabe gestellt, ein solches Verfahren bereitzustellen.

Erfindungsgemäß gelöst wird diese Aufgabe durch ein Verfahren zur Herstellung von Olefin-CO-Copolymeren, umfassend die Schritte:

- Bereitstellen eines Reaktors;
- Beaufschlagen des Reaktors mit einem gasförmigen Olefin und mit CO, so dass im Reaktor ein erster Druck p1 herrscht;

- Reaktion von Olefin mit CO in Gegenwart eines Katalysators im Reaktor;

wobei vor der Reaktion im Reaktor entweder kein CO vorliegt oder das Volumenverhältnis von gasförmigem Olefin zu CO $\geq$ 90:10 ist, und während der Reaktion zumindest zeitweise gasförmiges Olefin und CO zudosiert werden, wobei das Volumenverhältnis des zudosierten gasförmigen Olefins zu zudosiertem CO hierbei im zeitlichen Mittel $\geq$ 90:10 ist.

Unter den im erfindungsgemäßen Verfahren verwendeten Reaktionsbedingungen kann das Volumenverhältnis gasförmiges Olefin:CO dem Partialdruckverhältnis gasförmiges Olefin:CO gleichgesetzt werden. Daher kann anstelle des Volumenverhältnisses in analoger Weise auch das Partialdruckverhältnis betrachtet werden.

Dieses Verfahren erlaubt es, die gewünschten Olefin-CO-Copolymere in einer für technische Anwendungen zufriedenstellenden TOF bereitzustellen. Bei der Durchführung der Copolymerisation von Olefinen mit CO nach dem erfindungsgemäßen Verfahren werden höhere TOFs erzielt als bei der Durchführung bei ansonsten gleichen Reaktionsbedingungen im Batch-Verfahren, also ohne das Zudosieren von gasförmigem Olefin und CO während der Reaktion.

Erfindungsgemäß ist vorgesehen, dass vor der Reaktion im Reaktor entweder gasförmiges Olefin in Abwesenheit von CO vorliegt oder dass das Volumenverhältnis von gasförmigem Olefin zu CO $\geq$ 90:10 ist. Vorzugsweise liegt dieses Verhältnis in einem Bereich von $\geq$ 90:10 bis $\leq$ 99,5:0,5, mehr bevorzugt $\geq$ 90:10 bis $\leq$ 98:2. Die gleichen Betrachtungen gelten für die zeitlichen Mittelwerte der Volumenverhältnisse des während der Reaktion zudosierten Olefins zu zudosiertem CO.

Ohne auf eine Theorie festgelegt zu sein wird angenommen, dass bei der Copolymerisation eines Ethylen-CO-Gemisches in einem Volumenverhältnis Ethylen : CO $\geq$ 90:10 in Anwesenheit eines Palladium-Katalysators mit einem zweizähnigen Phosphin-Sulfonat-Liganden (Modellsystem) mindestens zwei Reaktionsphasen mit unterschiedlichen Reaktionsgeschwindigkeiten durchlaufen werden. Demnach wird in einer ersten Phase (alternierende Phase) mit niedriger Reaktionsgeschwindigkeit ein überwiegend alternierendes Ethylen-CO-Copolymer mit einer Zusammensetzung Ethylen : CO nahe 1:1 gebildet, bevor in einer späteren Phase (nicht-alternierende Phase) mit höherer Reaktionsgeschwindigkeit ein überwiegend nicht-alternierendes Ethylen-CO-Copolymer mit einem Ethylen:CO-Verhältnis > 1:1 gebildet wird. Dies führt dazu, dass bei der Copolymerisation von Ethylen und CO im Batch-Verfahren, also ohne Zudosieren von Ethylen und CO im Reaktionsverlauf, während der Bildung der alternierenden Ethylen-CO-Copolymere in der alternierenden Phase ein großer Teil des verfügbaren CO in alternierende Einheiten eingebaut wird, so dass in der nachfolgenden nicht-alternierenden Phase ein überwiegend Ethylen-haltiges Polymer gebildet wird. Es liegt daher ein unerwünscht hoher molarer Anteil an alternierenden $CO-C_2H_4-CO$-Abschnitten bezogen auf die Gesamtmenge aller Abschnitte $CO-(C_2H_4)_x-CO$ und $CO-(C_2H_4)_y-EG$ vor.

Als Olefin-CO-Copolymere im Sinne der Erfindung werden Polymere bezeichnet, die aus der Copolymerisation mindestens eines Olefins mit Kohlenmonoxid (CO) nach dem erfindungsgemäßen Verfahren hervorgehen.

Die Polymerketten der erfindungsgemäßen Olefin-CO-Copolymere enthalten mindestens einen Abschnitt $-CO-(C_2H_{4-n}R_n)_x-CO-$, wobei $x \geq 2$, $n \geq 1$ und $n \leq 4$ ist und R abhängig vom eingesetzten Olefin oder dem eingesetzten Olefin-Gemisch Wasserstoff oder einen linearen oder verzweigten, gesättigten oder ein- oder mehrfach ungesättigten C1- bis C20-Alkylrest bezeichnet, der zusätzlich ein oder mehrere Heteroatome, insbesondere Sauerstoff, Stickstoff, Schwefel, Silizium und/oder Phosphor enthalten kann, und verschiedene R sich innerhalb einer Einheit $C_2H_{4-n}R_n$ und zwischen verschiedenen Einheiten $C_2H_{4-n}R_n$ unterscheiden können und/oder innerhalb einer Einheit $C_2H_{4-n}R_n$ verschiedene R so miteinander verknüpft sind, dass sie bi-, tri- oder polycylische Systeme ausbilden. Neben den Abschnitten $CO-(C_2H_{4-n}R_n)_x-CO$ kann die Polymerkette Abschnitte $CO-(C_2H_{4-n}R_n)_1-CO$ enthalten, wobei n und R den oben genannten Definitionen entsprechen. Verschiedene Abschnitte $CO-(C_2H_{4-n}R_n)_x-CO$ und/oder $CO-(C_2H_{4-n}R_n)_1-CO$ können über eine gemeinsame CO-Gruppe verknüpft sein und sich somit eine CO-Gruppe teilen. Im Falle des Vorhandenseins von Abschnitten $CO-(C_2H_{4-n}R_n)_1-CO$ beträgt der alternierende Anteil, also der molare Anteil an $CO-(C_2H_{4-n}R_n)_1-CO$-Abschnitten $\leq$ 32,5 mol-% bezogen auf die Gesamtmenge aller Abschnitte $CO-(C_2H_{4-n}R_n)_x-CO$ und $CO-(C_2H_{4-n})_y-EG$, wobei $y \geq 1$ ist und EG für eine Endgruppe steht.

Neben den durch die Anwesenheit der Olefinreste R in Einheiten $C_2H_{4-n}R_n$ bedingten Verzweigungen der Polymerkette können in der Polymerkette zusätzliche kurzkettige Verzweigungen $-CH(CH_{3-m}R_m)$-oder $-CR(CH_{3-m}R_m)$- auftreten, wobei m = 0, 1 oder 2 ist und R die oben angegebene Bedeutung hat.

Als Endgruppen (EG) enthalten die erfindungsgemäßen Olefin-CO-Copolymere beispielsweise Carboxylgruppen, Formylgruppen, lineare oder verzweigte, gesättigte oder ein- oder mehrfach ungesättigte C1- bis C20-Alkyl- oder Cycloalkylreste, die zusätzlich ein oder mehrere Heteroatome, insbesondere Sauerstoff, Stickstoff, Schwefel, Silizium und/oder Phosphor enthalten können, Estergruppen -OC(O)R' oder Ethergruppen -O-R', wobei R' für einen linearen oder verzweigten, gesättigten oder ein- oder mehrfach ungesättigten C1- bis C20-Alkyl- oder Cycloalkylrest steht, der zusätzlich ein oder mehrere Heteroatome, insbesondere Sauerstoff, Stickstoff und/oder Schwefel enthalten kann, wobei diese Aufzählung nicht als umfassend zu betrachten ist. Beispiele für in den erfindungsgemäßen Olefin-CO-Copolymeren enthaltene Endgruppen sind insbesondere Acetat $-OC(O)CH_3$, Methoxy $-OCH_3$, Methyl $-CH_3$, Ethyl $-CH_2CH_3$, Ethylen $-CH=CH_2$, 1-Propylen $-CH=CH-CH_3$, 1-Methylpropyl-2-en $-CH(CH_3)-CH=CH_2$, 6-Alkoxy-exo-5,6-dihydrodicyclopentadienyl, 2-Alkoxycyclooct-5-enyl, wobei die Alkoxygruppen von einem linearen oder verzweigten C1- bis C20-Alkylrest

abgeleitet sind.

Bevorzugt weisen die erfindungsgemäßen Olefin-CO-Copolymere ein zahlenmittleres Molekulargewicht ≤ 15000 g/mol auf. Das Molekulargewicht kann beispielsweise per Gelpermeations-Chromatographie oder NMR-Spektroskopie bestimmt werden.

Hinsichtlich des Reaktors eignet sich grundsätzlich jedes Reaktionsgefäß, welches für die während der Reaktion herrschenden Drücke und Temperaturen ausgelegt ist. So kann es sich um Rührkesselreaktoren, Autoklaven und dergleichen handeln, wobei im Fall eines heterogenen Katalysators die Katalysatorschüttung im Festbett, im Rieselbett oder im Wirbelbett vorliegen kann.

Als Olefin im Sinne der Erfindung werden Olefine $C_2H_{4-n}R_n$, bezeichnet, die mindestens eine C=C-Doppelbindung enthalten, wobei n ≥ 1 und ≤ 4 ist und R einen linearen oder verzweigten, gesättigten oder ein- oder mehrfach ungesättigten C1- bis C20-Alkylrest bezeichnet, der zusätzlich ein oder mehrere Heteroatome, insbesondere Sauerstoff, Stickstoff, Schwefel, Silizium und/oder Phosphor enthalten kann, und verschiedene R sich innerhalb eines Olefins $C_2H_{4-n}R_n$ unterscheiden können und/oder innerhalb eines Olefins $C_2H_{4-n}R_n$ verschiedene R so miteinander verknüpft sind, dass sie bi-, tri- oder polycylische Systeme ausbilden. Beispiele für Olefine sind Ethylen, Propylen, 1-Buten, 2-Buten, Isobuten, Butadien, 1-Penten, 1-Hexen, 4-Methyl-1-penten, 1-Hepten, 1-Octen, Isooctene, 1-Nonen, 1-Decen, Cyclopenten, Cyclopentadien, Cyclohexen, Cycloocten, Cyclooctadien, Norbornen, Styrol, 2-Methylstyrol, 3-Methylstyrol, 4-Methylstyrol, α-Methylstyrol, β-Methylstyrol, 4-Methoxystyrol. Die Bezeichnung Olefin bezieht sich im Sinne der Erfindung ebenfalls auf Gemische zweier oder mehrerer Olefine in beliebiger Zusammensetzung.

Als gasförmiges Olefin im Sinne der Erfindung werden Olefine $C_2H_{4-n}R_n$ im Sinne der Erfindung bezeichnet, die unter Normalbedingungen (25 °C, 1013 mbar) im gasförmigen oder überkritischen Zustand vorliegen. Beispiele für gasförmige Olefine sind Ethylen, Propylen, 1-Buten, 2-Buten, Isobuten und Butadien. Die Bezeichnung gasförmiges Olefin bezieht sich im Sinne der Erfindung ebenfalls auf Gemische zweier oder mehrerer gasförmiger Olefine in beliebiger Zusammensetzung.

Der Reaktor wird in Gegenwart oder Abwesenheit eines geeigneten Lösungsmittels mit einem gasförmigen Olefin oder einem Gemisch aus gasförmigen Olefinen und CO beaufschlagt, so dass im Reaktor ein erster Druck p1 beispielsweise zwischen 20 bis 300 bar, bevorzugt 30 bis 200 bar, besonders bevorzugt 30 bis 100 bar herrscht, und bei Verwendung eines Gemisches aus gasförmigem Olefin und CO das Volumenverhältnis zwischen gasförmigem Olefin und CO ≥ 90:10 beträgt. Die Anwesenheit eines zusätzlichen Gases, wie beispielsweise Wasserstoff oder eines Inertgases wie z.B. Stickstoff oder Argon, wird nicht ausgeschlossen, wobei jedoch die Bedingung erfüllt bleibt, dass das Volumenverhältnis zwischen gasförmigem Olefin und CO ≥ 90:10 beträgt.

Als Lösungsmittel für die Reaktion können aprotische Lösungsmittel wie z.B. Alkane, Cycloalkane, Aromaten wie z.B. Benzol, Toluol, Xylole, Mesitylene, chlorierte Alkane wie z.B. Dichlormethan, Chloroform, Dichlorethan, Tetrachlorethan, chlorierte Aromaten wie z.B. Chlorbenzol oder Dichlorbenzole, offenkettige oder zyklische Ether wie z.B. Diethylether, Methyl-*tert*-butylether, Tetrahydrofuran, 1,4-Dioxan, Polyether wie z.B. Ethylenglykoldimethylether, Diethylenglykoldimethylether oder dessen höhere Homologe, Ester wie z.B. Essigsäureethylester, zyklische Carbonate wie z.B. Ethylencarbonat oder Propylencarbonat, offenkettige oder zyklische Amide wie z.B. *N*,*N*-Dimethylformamid, *N*,*N*-Dimethylacetamid, *N*-Methylpyrrolidinon, oder protische Lösungsmittel wie Alkohole, z.B. Methanol, Ethanol, Isopropanol, Diole wie z.B. Ethylenglykol, Diethylenglykol und dessen höhere Homologe oder Wasser bzw. Gemische aus zwei oder mehrerer der vorgenannten Lösungsmittel in beliebiger Zusammensetzung eingesetzt werden. Bevorzugte Lösungsmittel sind Dichlormethan, Methanol, Tetrachlorethan, besonders bevorzugt ist Dichlormethan.

Die Copolymerisation des Olefins mit CO findet in Gegenwart eines Katalysators statt. Als Katalysator dienen beispielsweise Verbindungen, die mindestens ein Metallatom ausgesucht aus den Elementen Eisen, Kobalt, Nickel, Ruthenium, Rhodium und/oder Palladium enthalten. Bevorzugte Katalysatoren enthalten Nickel oder Palladium, besonders bevorzugte Katalysatoren Palladium.

Bei der Verwendung eines Lösungsmittels beträgt die Konzentration des Katalysators bezogen auf das Metall in der Regel $1 \times 10^{-5}$ bis $1 \times 10^{-1}$ mmol/L, bevorzugt $1 \times 10^{-4}$ mmol/L bis $5 \times 10^{-2}$ mmol/L und besonders bevorzugt $5 \times 10^{-4}$ mmol/L bis $1 \times 10^{-2}$ mmol/L.

Der Katalysator oder eine Mischung der Katalysator-Komponenten Metallsalz oder -komplex und Ligand kann entweder in Reinform oder zusammen mit einem Lösungsmittel und/oder Olefin im Reaktor vorgelegt werden, oder während des Erwärmens des Reaktors auf Reaktionstemperatur oder nach Erreichen der Reaktionstemperatur in gelöster oder flüssiger Form in den Reaktor injiziert werden. Im Falle der Injektion kann die Injektion entweder in Anwesenheit oder Abwesenheit von Lösungsmittel und/oder Olefin erfolgen. Unabhängig davon kann der Reaktor zum Zeitpunkt der Injektion Olefin oder ein Gemisch aus Olefin und CO enthalten, wobei das Volumenverhältnis von gasförmigem Olefin und CO ≥ 90:10 beträgt. Die Injektion kann jedoch auch in Abwesenheit von Olefin und CO erfolgen. Die Anwesenheit eines weiteren Gases wie z.B. Wasserstoff, Stickstoff oder Argon ist in allen genannten Verfahrensvarianten nicht ausgeschlossen.

Zusätzlich zum Katalysator können weitere Additive eingesetzt werden, welche beispielsweise eine Aktivierung bzw. Stabilisierung des Katalysators begünstigen. Mögliche Additive sind z.B. in Dalton Trans. 2008, 4537 aufgeführt.

Insbesondere gehören hierzu Methylaluminoxan (MAO), $[CPh_3][B(C_6F_5)_4]$ und andere Tetraarylborat-Salze, $B(C_6F_5)_3$ und Sulfonsäuren, wie z.B. 4-Toluolsulfonsäure. Diese Additive können entweder im Gemisch mit dem Katalysator oder separat vor oder nach Zufügen des Katalysators in das Reaktionsgemisch eingebracht werden.

Hinsichtlich der Reaktionsbedingungen wird die Reaktion in der Regel initiiert, wenn der Katalysator mit dem Olefin und CO bei einer Temperatur von ungefähr ≥ 90 °C und ≤ 150 °C in Kontakt ist.

Während der Copolymerisationsreaktion werden dem Reaktor zumindest zeitweise gasförmiges Olefin und CO sowie ggf. weiteres Olefin so zudosiert, dass das Volumenverhältnis von zudosiertem gasförmigem Olefin und CO im zeitlichen Mittel ≥ 90:10 beträgt. Dies kann durch kontinuierliche Zudosierung der getrennten gasförmigen Komponenten gasförmiges Olefin und CO in einem Volumenstromverhältnis ≥ 90:10 oder eines Gemisches aus gasförmigem Olefin und CO in einem Volumenverhältnis ≥ 90:10 erfolgen. Alternativ kann eine abwechselnde oder gleichzeitige Zudosierung von getrennten Volumina an gasförmigem Olefin und CO in einem über die Zeit gemittelten Volumenverhältnis gasförmiges Olefin : CO ≥ 90:10 oder eine pulsartige Zudosierung eines Gemisches aus gasförmigem Olefin und CO in einem Volumenverhältnis ≥ 90:10 erfolgen. Bevorzugt ist die kontinuierliche Zudosierung der getrennten gasförmigen Komponenten oder eines Gemisches.

Die Zudosierung wird so durchgeführt, dass der Druck im Reaktor während der Copolymerisation beispielsweise zwischen 20 und 300 bar, bevorzugt zwischen 30 und 200 bar, besonders bevorzugt zwischen 30 und 100 bar beträgt.

Die Dosierung kann manuell durch kontinuierliches oder wiederholtes pulsartiges Einstellen des Druckes mit den zuzudosierenden Gasen erfolgen, wobei ein über die Zeit gemitteltes Volumenverhältnis von gasförmigem Olefin : CO ≥ 90:10 eingehalten wird. Bevorzugt ist die Zudosierung mit Hilfe von Massenflussreglern oder Cori-Flow-Reglern, die mit einem digitalen Druckabnehmer verknüpft sind und den auftretenden Druckverlust differentiell durch Zudosierung von gasförmigem Olefin und CO in einem Volumenstromverhältnis gasförmiges Olefin : CO ≥ 90:10, oder eines Gemisches von gasförmigem Olefin und CO in einem Volumenverhältnis gasförmiges Olefin : CO ≥ 90:10 kompensieren.

Die Reaktionstemperatur während der Copolymerisation beträgt in der Regel ≥ 90 °C und ≤ 150 °C. Die Temperatur kann durch Außen- und/oder Innenbeheizung des Reaktors eingestellt werden. Bevorzugt ist die Regelung der Reaktionstemperatur über die Innentemperatur des Reaktors. Aufgrund der potenziellen Exothermie der Reaktion ist ein zusätzlicher Schutz vor Überhitzung des Reaktors und des Reaktionsgemisches durch Gegenkühlung vorteilhaft. Diese kann durch Kühlung der Reaktoraußenwand und/oder bevorzugt durch entsprechende Einbauten, beispielsweise einer Kühlschlange, im Reaktor erfolgen und bevorzugt in die Temperaturkontrolle eingebunden werden.

Die Reaktionszeit der Copolymerisation kann frei gewählt werden. Wird eine Verfahrensvariante gewählt, in der der Katalysator bei einer Temperatur von ungefähr ≥ 90 °C und ≤ 150 °C ohne vorherigen Kontakt mit gasförmigem Olefin in Abwesenheit von CO direkt mit einem Gemisch aus gasförmigem Olefin und CO in Kontakt gebracht wird, ist die Reaktionszeit länger als die Dauer der alternierenden Phase zu Beginn der Copolymerisation. Diese kann beispielsweise bestimmt werden durch Monitoring des Umsatzes an gasförmigem Olefin und CO. Wenn beispielsweise im Fall einer palladiumkatalysierten Reaktion der Umsatz pro Minute innerhalb von 5 Minuten um einen Faktor größer oder gleich 1,1 zunimmt und absolut größer als 1.5 $g/(mmol_{Pd} \cdot min)$ ist, kann die alternierende Phase als abgeschlossen betrachtet werden. Ein Monitoring des Umsatzes kann abhängig von der gewählten Verfahrensvariante beispielsweise erfolgen durch Bestimmung des Druckabfalls während der Reaktion und/oder der Volumina der zugeführten Gase in Abhängigkeit der Zeit. Die maximale Reaktionsdauer ist lediglich durch technische Faktoren wie z.B. Reaktorvolumen, Rührbarkeit und/oder Massentransport limitiert.

Die Copolymerisation kann durch Abkühlen des Reaktors auf eine Temperatur unterhalb 90 °C, bevorzugt 40 °C, und/oder Ablassen des Überdrucks beendet werden. Zusätzlich oder alternativ dazu kann eine Zugabe von Reagenzien erfolgen, welche den Katalysator desaktivieren. Als solche können beispielsweise Wasser, Ammoniak, primäre oder sekundäre Amine, Diole oder Gemische derselben in frei zu wählender Zusammensetzung zum Einsatz kommen.

Zur Isolierung der Olefin-CO-Copolymere werden, sofern vorhanden, nach dem Ablassen des Überdrucks Lösungsmittel und/oder unreagierte Olefine entfernt. Dies kann durch Filtration und ggf. waschen des erhaltenen Feststoffes mit einem der oben genannten Lösungsmittel erfolgen. Flüchtige Komponenten können alternativ oder zusätzlich im Anschluss destillativ entfernt werden. Dies kann bei Temperaturen zwischen einschließlich 20 °C und 90 °C, sowie ggf. bei einem verminderten Druck $\geq 1 \times 10^{-3}$ mbar und < 1013 mbar erfolgen. Weitere Aufreinigungsschritte wie beispielsweise Schmelzkristallisation, Fällung oder Umkristallisation aus einer Lösung des Copolymers in geeigneten Lösungsmitteln, ggf. bei erhöhten Temperaturen bis 120 °C, oder Dünnfilmverdampfung können angeschlossen werden, sind jedoch nicht zwingend notwendig.

Weitere Ausführungsformen der vorliegenden Erfindung werden nachfolgend beschrieben. Sie können beliebig miteinander kombiniert werden, sofern sich aus dem Kontext nicht einwandfrei das Gegenteil ergibt.

In einer Ausführungsform wird der Reaktor enthaltend den Katalysator oder die Katalysator-Komponenten mit einem Gemisch umfassend Olefin und CO auf einen Druck p ≤ p1 beaufschlagt, wobei das Volumenverhältnis von gasförmigem Olefin : CO ≥ 90:10 beträgt. Der Reaktor wird anschließend auf Reaktionstemperatur beheizt, wobei im Reaktor der Druck p1 erreicht wird. Die Copolymerisationsreaktion startet beispielsweise bei Überschreiten einer Temperatur von ungefähr 90 °C.

In einer weiteren Ausführungsform wird der Reaktor enthaltend den Katalysator oder die Katalysatorkomponenten auf Reaktionstemperatur geheizt und der Reaktor bei Reaktionstemperatur mit einem Gemisch umfassend Olefin und CO auf einen Druck p1 beaufschlagt, wobei das Volumenverhältnis von gasförmigem Olefin : CO ≥ 90:10 beträgt. Die Copolymerisationsreaktion startet dann in der Regel mit der Beaufschlagung des Reaktors.

In einer bevorzugten Ausführungsform wird der Reaktor enthaltend ein Gemisch aus Olefin und CO, wobei das Volumenverhältnis gasförmiges Olefin : CO ≥ 90:10 beträgt, bei einem Druck p < p1 auf Reaktionstemperatur beheizt, wobei bei Erreichen der Reaktionstemperatur im Reaktor ein Druck p' < p1 erreicht wird. Nach Erreichen der Reaktionstemperatur wird der Katalysator oder ein Gemisch der Katalysator-Komponenten injiziert, wobei mit der Injektion der Druck p1 erreicht wird und die Copolymerisation startet.

In einer Ausführungsform des erfindungsgemäßen Verfahrens liegt während der Reaktion der Druck im Reaktor im Bereich von ≥ 80% von p1 bis ≤ 120% von p1, bevorzugt ≥ 90% von p1 bis ≤ 110% von p1, besonders bevorzugt ≥ 95% von p1 bis ≤ 105% von p1.

In einer weiteren Ausführungsform des erfindungsgemäßen Verfahrens wird der während der Reaktion auftretende Druckverlust durch Nachführen von gasförmigem Olefin und CO in den Reaktor ausgeglichen, wobei das Volumenverhältnis des nachgeführten gasförmigen Olefins zum nachgeführten CO im zeitlichen Mittel ≥ 90:10 beträgt.

In einer weiteren Ausführungsform des erfindungsgemäßen Verfahrens umfasst der Katalysator Palladium.

In einer weiteren Ausführungsform wird ein Katalysator verwendet, der einen anionischen, zweizähnigen Liganden enthält, welcher ein über mindestens zwei und maximal vier weitere Atome mit einem Sauerstoff-Anion verbrücktes Phosphoratom enthält. Besonders bevorzugt ist bei diesem Liganden in dessen Komplexen Palladium das Zentralmetall. Das Sauerstoff-Anion liegt vorzugsweise in Form einer Sulfonat-Gruppe vor. Die Brücke zum Sauerstoff-Anion enthält vorzugsweise eine C=C-Doppelbindung, die besonders bevorzugt Teil eines aromatischen Systems ist. Das Phosphoratom liegt vorzugsweise in der Oxidationsstufe 3 vor und trägt neben dem verbrückenden Substituenten zwei weitere Alkyl- bzw. Arylsubstituenten. Besonders bevorzugt trägt das Phosphoratom neben dem verbrückenden Substituenten zwei *ortho*-alkoxysubstituierte Arylgruppen als Substituent. Ganz besonders bevorzugte Liganden sind Phosphin-Sulfonat-Liganden der Formel I,

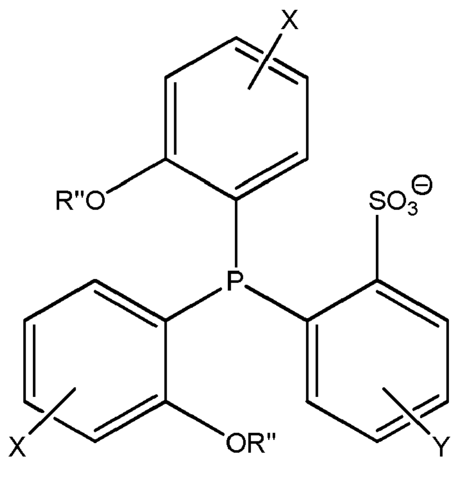

(I)

wobei

R" für einen linearen oder verzweigten, gesättigten oder ein- oder mehrfach ungesättigten C1- bis C20-Alkyl- oder Arylrest steht, der zusätzlich ein oder mehrere Heteroatome, insbesondere Sauerstoff, Stickstoff, Schwefel und/oder Phosphor enthalten kann,

und X und Y unabhängig voneinander für Wasserstoff, einen oder mehrere lineare oder verzweigte, gesättigte oder ein- oder mehrfach ungesättigte C1- bis C20-Alkyl-, -Aryl-, -Alkylaryl-, Arylalkyl-, - Alkyloxy-, Aryloxy-, -Alkylaryloxy- oder -Arylalkoxyrest stehen, die zusätzlich ein oder mehrere Heteroatome, insbesondere Sauerstoff, Stickstoff, Schwefel und/oder Phosphor enthalten können.

Weitere Substituenten an den aromatischen Ringsystemen, wie z.B. weitere lineare oder verzweigte, gesättigte oder ein- oder mehrfach ungesättigte, gegebenenfalls ein- oder mehrfach fluorierte C1- bis C20-Alkyl-, -Aryl-, -Alkylaryl-, Arylalkyl-, -Alkyloxy-, Aryloxy-, -Alkylaryloxy- oder - Arylalkoxyreste, Halogenatome, insbesondere Chlor oder Fluor,

Nitrogruppen und/oder Sulfonsäuregruppen sind nicht ausgeschlossen. Weiterhin können die aromatischen Ringe unabhängig voneinander Teil eines bi-, tri-, tetrazyklischen oder höheren Ringsystems sein.

In einer bevorzugten Ausführungsform wird ein Komplex enthaltend Palladium und den Liganden in einem molaren Verhältnis 1:1 eingesetzt. Bevorzugte komplexe Katalysatoren sind Pd(L^L')(P^O), wobei P^O für einen Liganden der Formel I steht und L^L' für 2-Alkoxycyclooct-5-enyl oder 6-Alkoxy-exo-5,6-dihydrodicyclopentadienyl, wobei die Alkoxygruppen von linearen oder verzweigten C1- bis C20-Alkylresten abgeleitet sind. Besonders bevorzugt gilt für den Liganden P^O der Formel IR'' = $CH_3$, X = H und Y = H oder $CH_3$ und für die Alkoxygruppen in L^L' Methoxy und Ethoxy.

In einer weiteren Ausführungsform des erfindungsgemäßen Verfahrens wird der Katalysator aus Vorläuferverbindungen im Reaktor *in situ* gebildet. In einer bevorzugten Ausführungsform wird der Katalysator vor der Reaktion oder *in situ* generiert durch Mischen eines Metallsalzes oder -komplexes mit dem Liganden in protonierter oder deprotonierter Form in einem molaren Verhältnis Metall : Ligand 1:0,5 bis 1:5, bevorzugt 1:0,8 bis 1:2, besonders bevorzugt 1:1 bis 1:1,5 in einem geeigneten Lösungsmittel aus der oben genannten Auswahl. Bevorzugte Metallsalze oder -komplexe sind Nickel- oder Palladiumsalze oder -komplexe wie z.B. $Ni(acac)_2$, $Ni(cod)_2$, $[Ni(allyl)Cl]_2$, $[Ni(allyl)Br]_2$, $Ni(PPh_3)PhCl$, Ni(dme)Br, $Pd(OAc)_2$, $[Pd(allyl)Cl]_2$, $[Pd(allyl)Br]_2$, PdMeCl(cod), $[Pd(codyl)Cl]_2$,$[Pd(cpdOEt)Cl]_2$, besonders bevorzugt sind $Pd(OAc)_2$, $[Pd(L^\wedge L')Cl]_2$ (wobei acac = Acetylacetonat, cod = 1,5-Cyclooctadien, dme = Dimethoxyethan und L^L' die oben angegebene Bedeutung hat).

In einer weiteren Ausführungsform des erfindungsgemäßen Verfahrens findet die Reaktion des Olefins mit CO in Gegenwart eines weiteren (flüssigen) Olefins, welches nicht zur Gruppe der gasförmigen Olefine gehört, statt. Es kann beispielsweise zusätzlich oder alternativ zu dem Lösungsmittel im Reaktor ein (flüssiges) Olefin $C_2H_{4-n}R_n$ oder ein Gemisch von zwei oder mehr (flüssigen) Olefinen $C_2H_{4-n}R_n$ vorgelegt werden, wobei n und R die oben angegebenen Bedeutungen haben. Geeignete (flüssige) Olefine sind beispielsweise 1-Penten, 1-Hexen, 4-Methyl-1-penten, 1-Hepten, 1-Octen, Isooctene, 1-Nonen, 1-Decen, Styrol, 2-Methylstyrol, 3-Methylstyrol, 4-Methylstyrol, $\alpha$-Methylstyrol, $\beta$-Methylstyrol, 4-Methoxystyrol. Bevorzugte flüssige Olefine sind 1-Hexen, 4-Methyl-2-penten, 1-Octen, Isooctene, Styrol, $\alpha$-Methylstyrol, besonders bevorzugt sind 1-Hexen und Styrol.

In einer weiteren Ausführungsform kann das weitere (flüssige) Olefin während der Reaktion zum Reaktor zudosiert werden. Die beiden zuletzt genannten Ausführungsformen schließen sich nicht gegenseitig aus. So kann ein bestimmter Mengenanteil des weiteren (flüssigen) Olefins vor der Reaktion im Reaktor vorgelegt werden und die Restmenge an weiterem (flüssigen) Olefin während der Reaktion zudosiert werden.

Die weiteren (flüssigen) Olefine können während der Copolymerisation in die Polymerkette eingebaut werden und liegen in diesem Fall dort ebenfalls als Einheit $C_2H_{4-n}R_n$ in Polymerabschnitten CO-$(C_2H_{4-n}R_n)_1$-CO, CO-$(C_2H_{4-n}R_n)_x$-CO oder CO-$(C_2H_{4-n}R_n)_y$-EG vor.

In einer weiteren Ausführungsform wird vor der Reaktion des Olefins mit CO eine Homopolymerisation des Olefins oder eine Copolymerisation von mehreren Olefinen im Reaktor durchgeführt. Diese Ausführungsform bietet den Vorteil, dass die alternierende Phase mit geringer Reaktionsgeschwindigkeit zu Beginn der Copolymerisationsreaktion vermieden wird. Dies führt zu einer höheren Turnover-Frequenz (TOF), ausgedrückt in $g_{Produkt}/(mmol_{Pd} \times h)$, im Vergleich zu Verfahrenvarianten, in denen die Copolymerisation von Olefin und CO ohne vorherige Homopolymerisation des Olefins bzw. Copolymerisation mehrerer Olefine, im Reaktor durchgeführt wird. Zusätzlich bietet diese Ausführungsform den Vorteil, dass der alternierende Anteil im erhaltenen Olefin-CO-Copolymer herabgesetzt wird.

In einer Ausführungsform wird der Reaktor enthaltend den Katalysator oder die Katalysator-Komponenten sowie ggf. weiteres (flüssiges) Olefin mit gasförmigem Olefin in Abwesenheit von CO auf einen Druck $p < p1$ beaufschlagt. Der Reaktor wird anschließend auf Reaktionstemperatur beheizt, wobei im Reaktor der Druck p1 erreicht wird. Bei Überschreiten einer Temperatur von ungefähr 90 °C startet die Homopolymerisation des Olefins bzw. die Copolymerisation des gasförmigen und des weiteren (flüssigen) Olefins. Die Copolymerisation mit CO wird durch Zudosieren von gasförmigem Olefin und CO in einem über die Zeit gemittelten Volumenverhältnis von gasförmigem Olefin : CO $\geq$ 90:10 initiiert. Das Zudosieren von gasförmigem Olefin und CO kann direkt im Anschluss an den Start der Homopolymerisation des gasförmigen Olefins bzw. der Copolymerisation von gasförmigem und weiterem (flüssigem) Olefin, oder zeitversetzt erfolgen.

In einer bevorzugten Ausführungsform wird der Reaktor enthaltend gasförmiges Olefin sowie ggf. weiteres (flüssiges) Olefin in Abwesenheit von CO auf Reaktionstemperatur beheizt, wobei bei Erreichen der Reaktionstemperatur im Reaktor ein Druck $p' < p1$ erreicht wird. Nach Erreichen der Reaktionstemperatur wird der Katalysator injiziert, wobei mit der Injektion der Druck p1 erreicht wird und die Homopolymerisation des gasförmigen Olefins bzw. die Copolymerisation des gasförmigen und des weiteren (flüssigen) Olefins startet. Die Copolymerisation mit CO wird durch Zudosieren von gasförmigem Olefin und CO in einem über die Zeit gemittelten Volumenverhältnis von gasförmigem Olefin : CO $\geq$ 90:10 initiiert. Das Zudosieren von gasförmigem Olefin und CO kann direkt im Anschluss an den Start der Homopolymerisation des gasförmigen Olefins bzw. der Copolymerisation von gasförmigem und weiterem (flüssigem) Olefin, oder zeitversetzt erfolgen.

Alternativ kann der Katalysator oder ein Gemisch der Katalysator-Komponenten mit Hilfe eines Gemisches aus gasförmigem Olefin und CO in einem Volumenverhältnis gasförmiges Olefin : CO $\geq$ 90:10 in den Reaktor enthaltend

gasförmiges und ggf. weiteres (flüssiges) Olefin injiziert werden. Aufgrund des zum Zeitpunkt der Injektion vernachlässigbaren CO-Gehaltes im Reaktor wird mit der Injektion eine Homopolymerisation des gasförmigen Olefins initiiert, welche beim weiteren Zudosieren des Gemisches aus gasförmigem Olefin und CO in eine Copolymerisation übergeht.

In einer weiteren Ausführungsform des erfindungsgemäßen Verfahrens beträgt der Druck p1 ≥ 20 bar bis ≤ 300 bar. Bevorzugte Drücke sind ≥ 25 bis ≤ 200 bar, besonders bevorzugt ≥ 30 bar ≤ 80 bar.

In einer weiteren Ausführungsform des erfindungsgemäßen Verfahrens wird die Reaktion bei einer Temperatur von ≥ 90 °C bis ≤ 150 °C durchgeführt, bevorzugt ≥ 95 °C und ≤ 130 °C, besonders bevorzugt ≥ 100 °C und ≤ 120 °C.

In einer weiteren Ausführungsform des erfindungsgemäßen Verfahrens ist während der Reaktion das Verhältnis von gasförmigem Olefin zu CO zeitlich variabel. Auf diese Weise lassen sich Gradientenpolymere erhalten.

In einer weiteren Ausführungsform des erfindungsgemäßen Verfahrens wird der Katalysator oder ein Gemisch der Katalysatorkomponenten bei einer Temperatur von ≥ 90 °C bis ≤ 150 °C, bevorzugt bei der Reaktionstemperatur, in den Reaktor enthaltend Olefin oder ein Gemisch aus Olefin und CO injiziert. Der Vorteil dieser Ausführungsform besteht darin, dass der Startzeitpunkt der Polymerisationsreaktion sowie die Startbedingungen, insbesondere Druck und Temperatur, klar definiert sind. Dies führt insbesondere zu einer einheitlicheren Molekulargewichtsverteilung des erhaltenen Olefin-CO-Copolymers. Weiterhin wird eine mögliche Desaktivierung des Katalysators während des Aufheizprozesses vermieden.

Die vorliegende Erfindung betrifft weiterhin ein Olefin-CO-Copolymer, erhältlich durch ein erfindungsgemäßes Verfahren, wobei der Gehalt an in das Copolymer eingebautem CO bezogen auf alle eingebauten Monomere ≤ 5 mol-% beträgt und das Copolymer einen alternierenden Anteil von ≤ 32,5 mol-% aufweist. Die Bestimmung der Gehalte an eingebautem CO und des alternierenden Anteils wird ausführlich im experimentellen Teil weiter unten beschrieben. Vorzugsweise beträgt der Gehalt an in das Copolymer eingebautem CO ≥ 0,1 mol-% bis ≤ 5 mol-%, mehr bevorzugt ≥ 0,3 mol-% bis ≤ 4,7 mol-%. Es ist weiterhin bevorzugt, dass das Copolymer einen Gehalt an alternierenden CO-Olefin-Einheiten von ≥ 1 mol-% bis ≤ 32,5 mol-% aufweist, mehr bevorzugt ≥ 10 mol-% bis ≤ 32 mol-%.

In einer Ausführungsform dieses Olefin-CO-Copolymers weist dieses ein zahlenmittleres Molekulargewicht $M_n$ von ≤ 15000 g/mol auf. Dieses Molekulargewicht lässt sich am zweckmäßigsten mittels NMR-Spektroskopie bestimmen, wie im experimentellen Teil erläutert wird. Vorzugsweise beträgt das Molekulargewicht $M_n$ ≥ 900 g/mol bis ≤ 15000 g/mol, mehr bevorzugt ≥ 950 g/mol bis ≤ 13000 g/mol.

In einer weiteren Ausführungsform dieses Olefin-CO-Copolymers weist dieses einen Verzweigungsgrad von ≤ 14,0, vorzugsweise ≤ 8, besonders bevorzugt ≤ 5 Verzweigungen pro 1000 C-Atome auf. Der Verzweigungsgrad gibt die durchschnittliche Anzahl der Verzweigungen pro 1000 im Polymer enthaltener C-Atome an und kann beispielsweise $^{13}$C-NMR-spektroskopisch bestimmt werden durch das Verhältnis der Flächenintegrale der Signale für verzweigende (also mindestens dreifach substituierte C-Atome) $Ic_{verzw.}$ zu der Gesamtsumme der Flächenintegrale $I_i$ aller Signale der im Polymer enthaltenen C-Atome i.

Da durch jede Verzweigung eine zusätzlichen Endgruppe in das Polymer eingeführt wird, kann der Verzweigungsgrad ebenfalls bestimmt werden über die durchschnittliche Anzahl der zusätzlichen Endgruppen, also der in verzweigten Ketten zusätzlich zu den zwei theoretisch in einer linearen Kette enthaltenen Endgruppen, pro 1000 im Polymer enthaltener C-Atome.

Der Verzweigungsgrad VG ist dann nach Formel (II)

$$VG = 1000 \times \frac{n_{EG,Mol} - 2}{n_{C,Mol}} \qquad \text{(II)},$$

wobei $n_{EG,\,Mol}$ die durchschnittliche Anzahl der Endgruppen pro Molekül und $n_{C,\,Mol}$ die durchschnittliche Gesamtzahl der C-Atome pro Molekül bezeichnet. Diese Bestimmung kann beispielsweise auf $^1$H-NMR-spektroskopischem Wege erfolgen und ist in der Beschreibung der Methoden ausführlich beschrieben.

In einer weiteren Ausführungsform dieses Olefin-CO-Copolymers ist die Teilkristallinität dieses Olefin-CO-Copolymers < 50%, bevorzugt ≤ 30%, besonders bevorzugt ≤ 21%. Die Teilkristallinität kann mittels Differential Scanning Calorimetry (DSC) bestimmt werden. Die Bestimmung der Teilkristallinität wird in der Beschreibung der Methoden ausführlich beschrieben.

In einer weiteren Ausführungsform dieses Olefin-CO-Copolymers ist der Schmelzpunkt dieses Olefin-CO-Copolymers < 140 °C, bevorzugt ≤ 130 °C, besonders bevorzugt ≤ 126,7 °C. Die Teilkristallinität kann mittels Differential Scanning Calorimetry (DSC) bestimmt werden. Die Bestimmung der Teilkristallinität wird in der Beschreibung der Methoden ausführlich beschrieben.

Ein weiterer Gegenstand der vorliegenden Erfindung ist eine Polyolverbindung, erhältlich durch Reduktion eines erfindungsgemäßen Olefin-CO-Copolymers. Unter reduktiven Bedingungen können aus den Olefin-CO-Copolymeren Polyalkohole erhalten werden, welche ebenfalls vielfältige Anwendungen finden, z.B. als Weichmacher oder in

der Herstellung von Polyurethanpolymeren oder Formaldehydharzen.

Die Reduktion kann beispielsweise durch Hydrierung mit Wasserstoff an heterogenen oder homogenen Metallkatalysatoren durchgeführt werden. Alternativ ist die Reduktion mit Alkalimetallen oder Hydrid-Reagenzien wie z.B. Natriumborhydrid, Lithiumaluminiumhydrid, Boran (beispielsweise als Tetrahydrofuran- oder Dimethylsulfid-Komplex), Alkyl- oder Dialkylboranen oder Silanen mit der Struktur $SiH_{4-a}R_a$ mit a = 1, 2 oder 3 und R = Alkyl- oder Arylrest möglich.

Die Hydrierung mit Wasserstoff kann beispielsweise nach Verfahren durchgeführt werden, welche in J. Polymer Science (1998), 889 und Recent Research Developments in Polymer Science (1999), 355, JP 01-149828, JP 11-035676, JP 11-035677, EP 0 791 615 A1, JP 02-232228, EP 830 932 A2, EP 0 735 081 A2, JP 10-081745 und JP 09-235370 beschrieben werden.

In einem bevorzugten Verfahren erfolgt die Reduktion der Olefin-CO-Copolymere zu den entsprechenden Polyalkoholen mit molekularem Wasserstoff unter Einsatz eines heterogenen Hydrierkatalysators. Die Hydrierung erfolgt vorzugsweise bei Temperaturen zwischen 20 °C und 200 °C und bei Drücken zwischen 10 bar und 100 bar. Der Gehalt an heterogenem Hydrierkatalysator kann beispielsweise 0,01 Gewichts-% bis 100 Gewichts-% (Metallgehalt bezogen auf das Polymer), vorzugsweise 0,1 Gewichts-% bis 40 Gewichts-%, betragen.

Bevorzugte Katalysatoren enthalten die Elemente Cobalt, Nickel, Ruthenium, Rhodium und/oder Iridium. Die Katalysatoren können als Raney-Katalysatoren oder auf geeigneten Trägern verwendet werden. Besonders bevorzugt werden Raney-Nickel, Raney-Cobalt oder geträgerte Cobalt-, Nickel-, Ruthenium- und Rhodium-Katalysatoren eingesetzt. Die Katalysatoren können auch als Mischungen der bevorzugten Elemente Cobalt, Nickel, Ruthenium, Rhodium, Iridium untereinander vorliegen oder ≤ 50 Gewichts-%, bezogen auf den Metallanteil, an anderen Elementen wie beispielsweise Rhenium, Palladium oder Platin enthalten.

Der heterogene Hydrierkatalysator kann weiterhin frei von Palladium und Platin sein, wobei "frei von" technisch unvermeidliche Verunreinigungen mit einschließt.

Als Trägermaterialien eignen sich besonders Kohlenstoff und Oxide, wie Siliziumdioxid, Aluminiumdioxid, Mischoxide aus Siliziumdioxid und Aluminiumdioxid sowie Titandioxid.

Die Hydrierung kann in Gegenwart oder Abwesenheit von Lösungsmitteln durchgeführt werden. Als Lösungsmittel eignen sich besonders $C_1$- bis $C_8$-Alkohole sowie Mischungen dieser untereinander oder mit anderen Lösungsmitteln wie THF oder 1,4-Dioxan.

In einer Variante wird die Hydrierung bei einem Wasserstoffdruck von ≤ 100 bar durchgeführt. Hierunter ist der Wasserstoffdruck zu verstehen, welcher zu Beginn der Hydrierungsreaktion herrscht, wenn bereits die vorgesehene Reaktionstemperatur erreicht wurde. So kann beispielsweise bei Raumtemperatur ein Wasserstoffdruck von 80 bar eingestellt werden, welcher nach Aufheizen auf eine Reaktionstemperatur von ca. 200 °C auf 100 bar steigt. Vorzugsweise beträgt dieser Wasserstoffdruck ≥ 40 bar bis ≤ 100 bar. Besonders bevorzugt ist ein Wasserstoffdruck von ≥ 80 bar bis ≤ 100 bar.

In einer weiteren Variante erfolgt die Hydrierung in Gegenwart eines Hydroxylgruppen umfassenden Lösungsmittels oder Lösungsmittelgemisches. Mit eingeschlossen in den Begriff des Hydroxylgruppen umfassenden Lösungsmittels ist Wasser. Ein Beispiel für ein besonders geeignetes Lösungsmittel ist 2-Propanol (Isopropanol). Ein weiteres Beispiel ist ein Gemisch von 2-Propanol mit Wasser im Volumenverhältnis von ≥ 5:1 bis ≤ 10:1. Die hydroxylgruppenhaltige Komponente des Lösungsmittelgemisches kann auch alleine durch Wasser bereitgestellt werden. Ein Beispiel hierfür ist ein Gemisch von 1,4-Dioxan mit Wasser im Volumenverhältnis von ≥ 5:1 bis ≤ 10:1.

Die durch Reduktion eines nach dem erfindungsgemäßes Verfahren hergestellten Olefin-CO-Copolymers erhaltenen Polyalkohole sind besonders gut als Weichmacher, Vernetzer oder Bindemittel für mit Polyisocyanaten oder Formaldehydharzen chemisch vernetzte Lacke geeignet.

Ebenfalls betrifft die vorliegende Erfindung eine Polyamin- und/oder Polyamin-Polyalkoholverbindung, erhältlich durch reduktive Aminierung eines erfindungsgemäßen Olefin-CO-Copolymers. Durch reduktive Aminierung der (nach dem erfindungsgemäßes Verfahren hergestellten) Olefin-CO-Copolymere können Polyamine bzw. Polyamin-Polyalkohole, welche sowohl Amino- als auch Hydroxygruppen enthalten, hergestellt werden.

Die durch reduktive Aminierung der Olefin-CO-Copolymere erhaltenen Polyamine oder Polyamin-Polyalkohole sind interessante Reaktionspartner z.B. für Isocyanate oder Epoxide. Moleküle, die mehr als zwei Amin- oder Hydroxygruppen enthalten, sind interessante Vernetzer, die zusammen mit Amin- oder Hydroxyreaktiven Verbindungen, wie Polyisocyanaten oder Polyepoxiden, zu dreidimensionalen Netzwerken verbunden werden können. Zur Steuerung der Reaktivität können die primären Aminogruppen auch mit Maleinsäureestern zu Asparaginsäureestern oder mit Ketonen oder Aldehyden zu Ketiminen oder Aldiminen umgesetzt werden. Ferner können die Amingruppen mit Phosgen zu Isocyanaten umgesetzt werden. Diese Polyisocyanate sind ebenfalls interessante Polymerbausteine.

Die reduktive Aminierung kann durch Umsetzung der (nach dem erfindungsgemäßen Verfahren erhaltenen) Olefin-CO-Copolymere mit Hydroxylamin oder Hydroxylamin-Hydrochlorid zu den entsprechenden Polyoximen und anschließender Reduktion der erhaltenen Polyoxime erfolgen.

Für die Bildung der Polyoxime aus den (nach dem erfindungsgemäßen Verfahren erhaltenen) Olefin-CO-Copolymeren wird Hydroxylamin in ein bis zehnfach molaren Mengen bezogen auf die in den nach dem erfindungsgemäßen Verfahren erhaltenen Olefin-CO-Copolymeren enthaltenen Carbonylgruppen eingesetzt. Vorzugsweise wird Hydroxylamin als wässrige Lösung oder in Substanz eingesetzt. Es kann aber auch *in situ* aus Salzen des Hydroxylamins, wie Hydrochlorid oder Sulfat, in wässriger oder alkoholischer Lösung mit Basen freigesetzt werden. Die Umsetzung der nach dem erfindungsgemäßen Verfahren erhaltenen Olefin-CO-Copolymere mit Hydroxylamin kann in einem Zweiphasengemisch durchgeführt werden. Bevorzugt wird ein Zweiphasengemisch, das sich aus dem (nach dem erfindungsgemäßen Verfahren erhaltenen) Olefin-CO-Copolymer oder einer Lösung des (nach dem erfindungsgemäßen Verfahren erhaltenen) Olefin-CO-Copolymers in einem inerten Lösungsmittel, wie Benzol, Toluol, Chlorbenzol, Dichlorbenzol, Chloroform, Dichlorethan oder Tetrachlorethan und der wässrigen Hydroxylaminlösung bildet, eingesetzt. Ferner können auch zumindest teilweise in Wasser lösliche, gegenüber Hydroxylamin inerte Lösungsmittel, wie Methanol, Ethanol, Isopropanol, n-Propanol, n-Butanol, Dioxan, Tetrahydrofuran (THF), *N,N*-Dimethylformamid (DMF), *N*-Methylpyrrolidon (NMP) oder *N,N*-Dimethylacetamid als Lösungsvermittler eingesetzt werden. Die Reaktion wird bei Temperaturen von 0 bis 130 °C durchgeführt. Anschließend kann das Polyoxim durch Phasentrennung, Filtration oder/und Abdestillieren der flüchtigen Bestandteile der Reaktionsmischung isoliert werden.

Die Reduktion der Polyoxime, die aus den (nach dem erfindungsgemäßen Verfahren erhaltenen) Olefin-CO-Copolymeren hergestellt wurden, erfolgt mit einem geeigneten Reduktionsmittel, bevorzugt molekularem Wasserstoff unter Einsatz eines selektiven homogenen oder heterogenen Hydrierkatalysators. Die Hydrierung mit Wasserstoff erfolgt bei Temperaturen von 20 bis 200 °C, vorzugsweise von 80 bis 180 °C, besonders bevorzugt von 120 bis 160 °C, bei Drücken von 10 bis 200 bar, bevorzugt 10 bis 100 bar, besonders bevorzugt 10 bis 50 bar in Gegenwart von 0,1 bis 20 Gew.-% an Hydrierkatalysatoren, wie z.B. Kobalt, Nickel, Ruthenium, Rhodium, Palladium, Iridium, Platin. Die Katalysatoren können als Raney-Katalysatoren oder auf geeigneten Trägern eingesetzt werden. Bevorzugt werden Raney-Kobalt, Raney-Nickel, geträgerte Kobalt-, Nickel- oder Ruthenium-Katalysatoren eingesetzt. Als Trägermaterialien eignen sich besonders Kohlenstoff und Oxide, wie Siliziumdioxid, Aluminiumdioxid, Mischoxide aus Siliziumdioxid und Aluminiumdioxid sowie Titanoxid. Vorzugsweise wird die Hydrierung in Gegenwart von Ammoniak, besonders bevorzugt in äquimolarer Menge bezogen auf Oximgruppen durchgeführt. Die Hydrierung kann in Gegenwart oder Abwesenheit von Lösungsmitteln durchgeführt werden. Als Lösungsmittel eignen sich beispielsweise THF, Dioxan, oder C1-C4-Alkohole. Andere Reduktionsmittel sind Alkalimetalle oder deren Hydride, Alanate oder Boranate.

In einem alternativen Verfahren kann die reduktive Aminierung der (nach dem erfindungsgemäßen Verfahren erhaltenen) Olefin-CO-Copolymere direkt durch deren Umsetzung mit Ammoniak und anschließende Reduktion erhalten werden, wobei die beiden Verfahrensschritte Umsetzung mit Ammoniak und Reduktion zeitgleich in einem gemeinsamen Reaktor durchgeführt werden können.

In einer Variante des Verfahrens zur direkten reduktiven Aminierung der (nach dem erfindungsgemäßen Verfahren erhaltenen) Olefin-CO-Copolymere ist der Reaktor ein Rieselbettreaktor. Durch solch einen Reaktor können in vorteilhafter Weise eine hohe Reaktionstemperatur und ein hohes Katalysator/Substrat-Verhältnis erreicht werden. Bevorzugt wird das Reaktionsgemisch umfassend Gas- und Flüssigphase im Gleichstrom nach unten durch die Katalysatorschüttung geleitet. Gas- und Flüssigphase können jedoch auch im Gleichstrom nach oben oder im Gegenstrom durch die Katalysatorschüttung geleitet werden. In einer alternativen Variante wird eine bewegte Katalysatorschüttung von unten angeströmt. Gas- und Flüssigphase können vor dem Reaktor oder innerhalb des Reaktors oder in der Katalysatorschüttung in Kontakt miteinander gebracht werden.

Die Gasphase umfasst Wasserstoff und gasförmigen Ammoniak sowie gegebenenfalls Inertgas und/oder Lösungsmitteldämpfe. Die flüssige Phase besteht aus dem nach dem erfindungsgemäßen Verfahren erhaltenen Olefin-CO-Copolymer, flüssig vorliegendem oder gelöstem Ammoniak sowie gegebenenfalls Lösungsmittel.

In einer weiteren Variante umfasst der heterogene Hydrierkatalysator Metalle ausgewählt aus der Gruppe umfassend Kobalt, Nickel, Ruthenium, Rhodium, Palladium, Iridium und/oder Platin. Die Katalysatoren können als Raney-Katalysatoren oder auf geeigneten Trägern eingesetzt werden. Es können auch Legierungen, die die vorgenannten Metalle enthalten, eingesetzt werden. Alternativ können auch Mischungen der vorgenannten Katalysatoren eingesetzt werden. Bevorzugt werden Raney-Kobalt, Raney-Nickel, oder geträgerte Kobalt-, Nickel- oder Ruthenium-Katalysatoren eingesetzt. Als Trägermaterialien eignen sich besonders Kohlenstoff und Oxide, wie Siliziumdioxid, Aluminiumdioxid, Mischoxide aus Siliziumdioxid und Aluminiumdioxid sowie Titanoxid.

In einer weiteren Variante des Verfahrens wird die Reaktion bei einer Temperatur von $\geq$ 80 °C bis $\leq$ 280 °C durchgeführt. Bevorzugt ist ein Temperaturbereich von $\geq$ 160 °C bis $\leq$ 240 °C. Besonders bevorzugt ist ein Temperaturbereich von $\geq$ 180 °C bis $\leq$ 220 °C.

In einer weiteren Variante des Verfahrens wird die Reaktion bei einem Wasserstoffdruck von $\geq$ 10 bar bis $<$ 150 bar, bevorzugt von $\geq$ 20 bar bis $\leq$ 80 bar durchgeführt. Besonders bevorzugt ist ein Druckbereich von $\geq$ 30 bar bis $\leq$ 50 bar.

In einer weiteren Variante des Verfahrens wird die Reaktion bei einer Verweilzeit der flüssigen Phase im Katalysatorbett des Festbettreaktors von $\geq$ 1 Sekunde bis $\leq$ 1 Stunde durchgeführt. Bevorzugte Verweilzeiten liegen im Bereich von $\geq$ 5 Sekunden bis $\leq$ 10 Minuten. Besonders bevorzugte Verweilzeiten liegen im Bereich von $\geq$ 10 Sekunden bis $\leq$ 5 Minuten.

In einer weiteren Variante des Verfahrens beträgt das molare Verhältnis von Ammoniak zu Ketogruppen im eingesetzten Olefin-CO-Copolymer ≥ 1:1 bis ≤ 500:1. Bevorzugte Verhältnisse liegen im Bereich von ≥ 3:1 bis ≤ 100:1. Besonders bevorzugte Verhältnisse liegen im Bereich von ≥ 5:1 bis ≤ 50:1.

Das (nach dem erfindungsgemäßen Verfahren erhaltene) Olefin-CO-Copolymer kann flüssig oder geschmolzen in Reinsubstanz oder gelöst in einem Lösungsmittel eingesetzt werden. In einer weiteren Ausführungsform wird die reduktive Aminierung in Gegenwart eines Lösungsmittels durchgeführt, das ausgewählt ist aus der Gruppe umfassend $C_1$-$C_4$-Alkohole, 1,2-Dioxan, 1,3-Dioxan, 1,4-Dioxan, Tetrahydrofuran, 2-Methyltetrahydrofuran, 3-Methyltetrahydrofuran, 2,5-Dimethyltetrahydrofuran, Tetrahydrofurfurylmethylether, Tetrahydrofurfurylethylether, 2,5-Dimethoxymethyltetrahydrofuran, 2,5-Diethoxymethyltetrahydrofuran, Furfurylacetat, Tetrahydrofuran-2-carbonsäuremethylester, 1,3-Dioxolan, Tetrahydropyran und/oder Halogenalkane (wie Dichlormethan, 1,2-Dichlorethan, 1,1,2,2-Tetrachlorethan oder deren höhere Homologe).

In einer weiteren Variante wird die reduktive Aminierung in Gegenwart von flüssigem Ammoniak als Lösungsmittel oder mit in einem Lösungsmittel gelöstem Ammoniak durchgeführt.

In einer bevorzugten Ausführungsform des Verfahrens kommt das Olefin-CO-Copolymer erst innerhalb des Katalysatorbetts des Festbettreaktors mit dem Ammoniak in Kontakt. Auf diese Weise wird verhindert, dass schwerlösliche quervernetzte Imine gebildet werden, die ausfallen können.

Die erhaltenen Polyamine oder Polyamin-Polyalkohole sind besonders gut als Reaktionspartner für Isocyanate und Epoxide, als Edukte für die Phosgenierung zu Polyisocyanaten und für die Herstellung elastischer Beschichtungen oder Formkörper geeignet. Die Folgeprodukte mit Maleinsäuredialkylestern (Polyaspartate) und mit Ketonen oder Aldehyden (Polyketimine oder Polyaldimine) eignen sich besonders gut als Reaktionspartner für Polyisocyanate.

Schließlich ist auch die Verwendung von erfindungsgemäßen Olefin-CO-Copolymeren, von erfindungsgemäßen Polyolverbindungen und/oder von erfindungsgemäßen Polyamin- und/oder Polyamin-Polyalkoholverbindungen als Polymeradditive und/oder zur Herstellung von Polyurethan- und/oder Polyharnstoffpolymeren Bestandteil der vorliegenden Erfindung. Insbesondere finden die erfindungsgemäßen Olefin-CO-Copolymere, die erfindungsgemäßen Polyolverbindungen sowie die erfindungsgemäßen Polyamin- oder Polyamin-Polyalkohol-Verbindungen Anwendung beispielsweise als Weichmacher für PVC, als Bindemittel, als Kunststoff-Additive oder -Vernetzer, oder in Pulverlacken. Daher betrifft die vorliegende Erfindung weiterhin die Verwendung der nach dem erfindungsgemäßen Verfahren erhaltenen Olefin-CO-Copolymere, der erfindungsgemäßen Polyalkohole und/oder der erfindungsgemäßen Polyamin- und/oder Polyalkohole als Weichmacher für PVC, als Bindemittel, als Kunststoff-Additive oder -Vernetzer, oder in Pulverlacken.

Die vorliegende Erfindung wird anhand der folgenden Beispiele näher erläutert, ohne jedoch darauf beschränkt zu sein.

<u>Beispiele:</u>

Beschreibung der Methoden:

Die Polymerisationsreaktionen wurden in einem 300 mL Edelstahl-Autoklaven mit Glaseinsatz durchgeführt. Das System war mit einem mechanischen Rührer und automatischer interner Kühlung ausgestattet. Die Beheizung erfolgte über eine Heizmanschette und wurde über die Reaktorinnentemperatur gesteuert. Die Katalysatorlösung wurde in einem Schlenkrohr unter Argon hergestellt und mit einer Spritze im Argon-Gegenstrom in eine Gasbürette überführt, welche über ein mit einem Absperrventil ausgestattetes Tauchrohr mit dem Reaktorinnenraum verbunden war. Das Gasgemisch aus gasförmigem Olefin und CO (Angabe der Zusammensetzung in Vol-%) wurde in einer Mischkammer mit einem Volumen von 3,8 L bei einem Druck von 60 bar vorgelegt. Die Gaszufuhr in den Reaktor erfolgte wahlweise über einen Massenflussregler (MFC) der Firma Bronckhorst (Kapazität 2 Normliter/min), der mit einem mit dem Reaktorinnenraum verbundenen Drucksensor gekoppelt war, eine Bypass-Leitung oder die Gasbürette. Die Beaufschlagung des Reaktors mit dem gasförmigen Olefin oder dem Gasgemisch aus gasförmigem Olefin und CO zu Beginn der Reaktion erfolgte über die Bypass-Leitung. Die Injektion der Katalysatorlösung erfolgte durch Beaufschlagung der Gasbürette mit dem gasförmigen Olefin oder dem Gasgemisch aus gasförmigem Olefin und CO und Öffnen der Verbindung zum Reaktor. Die Feineinstellung des Gesamtdrucks nach Injektion des Katalysators erfolgte über den MFC. Das Zudosieren des gasförmigen Olefins oder des Gasgemisches aus gasförmigem Olefin und CO im Reaktionsverlauf erfolgte über den MFC durch Kompensation des während der Reaktion auftretenden Druckabfalls. Zum Beenden der Reaktion wurde die Gaszufuhr geschlossen und der Autoklav mit Hilfe der internen Kühlung sowie ggf. durch externe Kühlung mit Hilfe eines Eis- oder Wasserbades auf Raumtemperatur abgekühlt.

Folgende Reagenzien und Gase wurden ohne weitere Aufreinigung eingesetzt:

Ethylen (3.0), Gerling Holz & Co., Hamburg

Kohlenmonoxid CO (3.7), Praxair, Belgien

1-Hexen, CAS [592-41-6], Katalog-Nr. 320323, Aldrich (wurde vor Gebrauch destilliert)

Styrol, CAS [100-42-5], Katalog-Nr. W323306, Aldrich

Palladiumacetat ($Pd(OAc)_2$, CAS [3375-31-3]), Katalog-Nr. 379875, Aldrich

Ligand P^O (2-[Bis(2-methoxyphenyl)phophino]benzolsulfonsäure), CAS [257290-43-0], Convertex

Die Synthese des Komplex-Katalysators [Pd(dcpOEt)(P^O)] (= [(1-$\eta^2$,5-$\eta^1$-6-Ethoxy-exo-5,6-dihydrodicyclopentadien){2-[bis(2-methoxyphenyl)phophino]benzolsulfonato}palladium]) erfolgte entsprechend Organometallics (2005) 2754, Verbindung 2b.

Als Lösungsmittel wurde Dichlormethan eingesetzt, das über $CaCl_2$, Molsieb 4Å und F 200 getrocknet und anschließend mit Argon entgast wurde.

Analytik:

$^1$H-NMR-Spektroskopie: Die Messungen erfolgten auf einem Bruker AV300 (300 MHz) bei 95 °C; die Kalibrierung der chemischen Verschiebungen erfolgte relativ zum Lösungsmittelsignal (Chlordeuterobenzol $C_6D_5Cl$, Verschiebung des Tieffeldsignals: $\delta$ = 7.14 ppm; 1,2-Dichlordeuterobenzol $C_6D_4Cl_2$, Verschiebung des Tieffeldsignals: $\delta$ = 7.19 ppm); s = Singulett, m = Multiplett, bs = verbreitertes Singulett, kb = komplexer Bereich. Die Angabe der Integrale erfolgt relativ zueinander. Die Signale wurden wie folgt zugeordnet (betreffende Gruppe ist unterstrichen):

*Ethylen-CO-Copolymere:*

| $\delta$ [ppm] (ungefähre Angabe) | Integral | chem. Gruppe |
|---|---|---|
| 0,7 - 0,95 | A | $-C\underline{H}_3$ |
| 1,0 - 1,5 | B | $-CH_2-C\underline{H}_2-CH_2-$ |
| 1,5 - 1,7 | C | $-CO-CH_2-C\underline{H}_2-CH_2-$ |
| 1,9 - 2,1 | D | $-CH_2-C\underline{H}_2-CH=CH_2-$ |
| 2,1 - 2,3 | E | $-CO-C\underline{H}_2-CH_2-CH_2-$ |
| 2,4 - 2,6 | F | $-CO-C\underline{H}_2-C\underline{H}_2-CO-$ |
| 4,9 - 5,1 | G | $-CH=C\underline{H}_2$ |
| 5,3 - 5,4 | H | $-C\underline{H}=C\underline{H}-$ |
| 5,7 - 5,9 | I | $-C\underline{H}=CH_2$ |

Der molare CO-Gehalt $x_{CO}$ (in mol-%) errechnet sich aus den Flächenintegralen A bis I wie folgt:

$$x_{CO} = 100\% \times \frac{E+F}{A+B+C+D+2E+2F+G+H+I}$$

Der molare Ethylen-Gehalt $x_{Ethylen}$ (in mol-%) wird berechnet nach:

$$x_{Ethylen} = 100\% - x_{CO}$$

Für Ethylen-CO-Copolymere können die molaren Anteile $x_i$ der Monomere i (Ethylen bzw. CO) den jeweiligen Gewichtsanteilen $y_i$ (in Gew.-%) der Monomere i gleichgesetzt werden.

Der Anteil $x_{alt}$ an alternierenden Einheiten (in mol%) errechnet sich aus den Integralen E und F nach:

$$x_{alt} = 100\% \times \frac{F}{E+F}$$

Das durchschnittliche Molekulargewicht MW errechnet sich unter der Annahme, dass pro Polymerkette eine Doppelbindung vorliegt, nach:

$$MW = \frac{14 \times \frac{A+B+C+D+E+F+G+H+I}{2} + 28 \times \frac{E+F}{4}}{\frac{G+H}{2}}$$

Der Verzweigungsgrad VG wird nach Formel (II) berechnet, wobei

$$n_{EG,Mol} = \frac{\frac{A}{3} + \frac{G}{2}}{\frac{G+H}{2}}$$

und

$$n_{C,Mol} = \frac{\frac{A+B+C+D+E+F+G+H+I}{2} + \frac{E+F}{4}}{\frac{G+H}{2}}$$

*Ethylen-CO-1-Hexen-Terpolymere:*

| δ [ppm] (ungefähre Angabe) | Integral | chem. Gruppe |
|---|---|---|
| 0,7 - 1,0 | A' | $-C\underline{H}_3$ |
| 1,0 - 1,5 | B' | $-CH_2-C\underline{H}_2-CH_2-$ |
| 1,5 - 1,7 | C' | $-CO-CH_2-C\underline{H}_2-CH_2$ $-CH_2C\underline{H}(^nBu)CH_2-$ |
| 1,9 - 2,1 | D' | $-CH_2-C\underline{H}_2-CH=CH_2$ / $-CH_2-C\underline{H}_2-CH=CH-$ |
| 2,1 - 2,3 | E' | $-CO-C\underline{H}_2-CH_2-CH_2-$ |
| 2,4 - 2,6 | F' | $-CO-C\underline{H}_2-C\underline{H}_2-CO-$ |
| 4,75 | G' | $-CH_2-C(^nBu)=C\underline{H}H'$ |
| 4,9 - 5,1 | H' | $-CH=C\underline{H}_2$ / $-C(^nBu)=CH\underline{H}'$ |
| 5,3 - 5,5 | I' | $-C\underline{H}=C\underline{H}-$ |
| 5,7 - 5,9 | J' | $-C\underline{H}=CH_2$ |

Die Gewichtsanteile $y_i$ der einzelnen Monomere i (Ethylen, CO und 1-Hexen) errechnen sich aus den Integralen A' bis J' wie folgt:

$$y_{1-Hexen} = 100\% \times \frac{84 \times \left( \frac{A'}{3} - \frac{G'+H'}{2} \right)}{14 \times \frac{A'+B'+C'+D'+E'+F'+G'+H'+I'+J'}{2} + 28 \times \frac{E'+F'}{4}}$$

$$y_{CO} = 100\% \times \frac{28 \times \frac{E'+F'}{4}}{14 \times \frac{A'+B'+C'+D'+E'+F'+G'+H'+I'+J'}{2} + 28 \times \frac{E'+F'}{4}}$$

$$y_{Ethylen} = 100\% - y_{1-Hexen} - y_{CO}$$

Die Stoffmengenanteile $x_i$ der einzelnen Monomere i (Ethylen, CO und 1-Hexen) errechnen sich aus den Gewichtsanteilen $y_i$ mit $M_{Ethylen}$ = 28 g/mol, $M_{CO}$ = 28 g/mol und $M_{1\text{-}Hexen}$ = 84 g/mol wie folgt:

$$x_i = \frac{y_i / M_i}{\sum_i y_i / M_i}$$

Der Anteil $x_{alt}$ an alternierenden Einheiten (in mol%) errechnet sich aus den Integralen E' und F' nach:

$$x_{alt} = 100\% \times \frac{F'}{E'+F'}$$

Das durchschnittliche Molekulargewicht MW errechnet sich unter der Annahme, dass pro Polymerkette eine Doppelbindung vorliegt, nach:

$$MW = \frac{14 \times \frac{A'+B'+C'+D'+E'+F'+G'+H'+I'+J'}{2} + 28 \times \frac{E'+F'}{4}}{\frac{G'+H'}{2} + \frac{I'}{2}}$$

Der Verzweigungsgrad VG wird nach Formel (II) berechnet, wobei

$$n_{EG,Mol} = \frac{\frac{A'}{3} + \frac{G'+H'}{2}}{\frac{G'+H'}{2} + \frac{I'}{2}}$$

und

$$n_{C,Mol} = \frac{\frac{A'+B'+C'+D'+E'+F'+G'+H'+I'+J'}{2} + \frac{E'+F'}{4}}{\frac{G'+H'}{2} + \frac{I'}{2}}$$

*Ethylen-CO-Styrol-Terpolymere:*

Die Kalibrierung der chemischen Verschiebung erfolgte anhand des Maximums des Methylen-Signals mit dem Integral B" ($-CH_2-C\underline{H}_2-CH_2-$), $\delta$ = 1,37 ppm.

| δ [ppm] (ungefähre Angabe) | Integral | chem. Gruppe |
|---|---|---|
| 0,7 - 1,0 | A" | $-C\underline{H}_3$ |
| 1,0 - 1,5 | B" | $-CH_2-C\underline{H}_2-CH_2-$ |
| 1,5 - 1,7 | C" | $-CO-CH_2-C\underline{H}_2-CH_2-$ |
| 1,9 - 2,1 | D" | $-CH_2-C\underline{H}_2-CH=CH_2$ / $-CH_2-C\underline{H}_2-CH=CH-$ |
| 2,1 - 2,3 | E" | $-CO-C\underline{H}_2-CH_2-CH_2-$ |
| 2,4 - 2,6 | F" | $-CO-C\underline{H}_2-C\underline{H}_2-CO-$ |
| 2,6 - 2,8 | $S_1$ | $-CH_2-C\underline{H}Ph-CH_2-$ |
| 4,9 - 5,1 | H" | $-CH=C\underline{H}_2$ |
| 5,3 - 5,5 | I" | $-C\underline{H}=C\underline{H}-$ |
| 5,7 - 5,9 | J" | $-C\underline{H}=CH_2$ |
| 6,0 - 6.3 | $S_2$ | $-C\underline{H}=C\underline{H}-Ph$ |
| 6.4 - 6.5 | $S_3$ | $-CH=C\underline{H}-Ph$ |
| 6,5 - 6,8 | | $C\underline{H}_{ar}$ |
| 6,9 - 7,6 | | $C\underline{H}_{ar}$ |

Die Signale der $CH_{ar}$-Gruppen überlappen mit den Signalen des Lösungsmittels ($C_6D_5Cl$), deshalb können die Integrale dieser Signale nicht zur Bestimmung des Styrol-Gehaltes herangezogen werden. Die Bestimmung des Styrol-Gehaltes erfolgte deshalb über die Integrale $S_1$, $S_2$ und $S_3$.

Die Gewichtsanteile $y_i$ der einzelnen Monomere i (Ethylen, CO und Styrol) errechnen sich aus den Integralen A'' bis J'' und $S_1$ bis $S_3$ wie folgt:

$$y_{Styrol} = 100\% \times \frac{104 \times (S_1 + S_3)}{15 \times \frac{A''}{3} + 14 \times \frac{B''+C''+D''+E''+F''+H''}{2} + 13 \times (I''+J''+S_2) + 90 \times (S_1 + S_3) + 28 \times \frac{E''+F''}{4}}$$

$$y_{CO} = 100\% \times \frac{28 \times \frac{E''+F''}{4}}{15 \times \frac{A''}{3} + 14 \times \frac{B''+C''+D''+E''+F''+H''}{2} + 13 \times (I''+J''+S_2) + 90 \times (S_1 + S_3) + 28 \times \frac{E''+F''}{4}}$$

$$y_{Ethylen} = 100\% \times \frac{14 \times \frac{A''+B''+C''+D''+E''+F''+H''+I''+J''-2 \times S_1}{2}}{15 \times \frac{A''}{3} + 14 \times \frac{B''+C''+D''+E''+F''+H''}{2} + 13 \times (I''+J''+S_2) + 90 \times (S_1 + S_3) + 28 \times \frac{E''+F''}{4}}$$

Die Stoffmengenanteile $x_i$ der einzelnen Monomere i (Ethylen, CO und Styrol) errechnen sich aus den Gewichtsanteilen $y_i$ mit $M_{Ethylen}$ = 28 g/mol, $M_{CO}$ = 28 g/mol und $M_{Styrol}$ = 104 g/mol wie folgt:

$$x_i = \frac{y_i / M_i}{\sum_i y_i / M_i}$$

Der Anteil $x_{alt}$ an alternierenden Einheiten (in mol%) errechnet sich aus den Integralen E" und F'' nach:

$$x_{alt} = 100\% \times \frac{F''}{E''+F''}$$

Das durchschnittliche Molekulargewicht MW errechnet sich unter der Annahme, dass pro Polymerkette eine

Doppelbindung vorliegt, nach:

$$MW = \frac{15\times\frac{A''}{3}+14\times\frac{B''+C''+D''+E''+F''+H''}{2}+13\times(I''+J''+S_2)+90\times(S_1+S_3)+28\times\frac{E''+F''}{4}}{\frac{H''+I''}{2}+S_3}$$

Der Verzweigungsgrad VG wird nach Formel (II) berechnet, wobei

$$n_{EG,Mol} = \frac{\frac{A''}{3}+S_1+\frac{H''}{2}+S_3}{\frac{H''}{2}+\frac{I''}{2}+S_3}$$

und

$$n_{C,Mol} = \frac{\frac{A''}{3}+\frac{B''+C''+D''+E''+F''+H''}{2}+S_1+I''+J''+S_2+S_3}{\frac{H''}{2}+\frac{I''}{2}+S_3}$$

Infrarot (IR)-Spektroskopie: Die Messungen erfolgten auf einem Bruker Alpha-P FT-IR-Spektrometer; die Messungen erfolgten in Reinsubstanz; angegeben ist die Wellenzahl des Maximums des Signals für die CO-Streckschwingung v(CO).

Die Bestimmung der Viskosität erfolgte auf einem Physica MCR 501 Rheomether der Fa. Anton Paar. Es wurde eine Kegel-Platte-Konfiguration mit einem Abstand von 50 $\mu$m gewählt (Messsystem DCP25). 0,1 g der Substanz wurde auf der Rheometerplatte aufgebracht und bei 160 °C einer Scherung von 0,01 bis 1000 1/s unterworfen und für 10 min alle 10 s die Viskosität gemessen. Angegeben ist die über alle Messpunkte gemittelte Viskosität.

Die Bestimmung der Schmelzpunkte erfolgte per DSC (Differential Scanning Calorimetry) auf einem DSC 1 STAR$^e$ der Firma Mettler Toledo. Die Probe wurde bei einer Heizrate von 10 K/min über zwei Heizzyklen von -80 °C bis +250 °C vermessen. Als Schmelzpunkt wurde das Wärmeabsorptionsmaximum der zweiten Aufheizrate angegeben.

Die Bestimmung der Teilkristallinität erfolgte per DSC (Differential Scanning Calorimetry) auf einem DSC 1 STAR$^e$ der Firma Mettler Toledo. Eine Probe des Polymers wurde auf dem Probenhalter platziert. Dieser wurde im Argonstrom auf 25 °C temperiert. Dann wurde die Probe mit einer Heizrate von 10 K/min auf eine Temperatur mindestens 50 °C unterhalb der Zersetzungstemperatur (typischerweise auf 200 °C) geheizt, anschließend mit einer Rate von 10 K/min auf 25 °C abgekühlt und bei dieser Temperatur für 2 min gehalten. Anschließend wurde dieser Heizzyklus wiederholt.

Die Teilkristallinität der Polymerprobe wurde mit den Formeln (IV) bis (VI) berechnet, wobei H' für die Wärme steht, die von dem Anteil des Polymers abgegeben wurde, der vor dem Erhitzen kristallin vorlag, $H_m$ für die Schmelzenthalpie, $H_c$ für die aufgenommen Wärme beim Abkühlen, $H^*_m$ für die spezifische Schmelzenthalpie, $m_c$ für die Masse des kristallinen Polymeranteils, m die Masse der Gesamtprobe und $\chi$ für die Teilkristallinität in Prozent steht.

$$H' = H_m - H_c \qquad \text{(IV)}$$

$$m_c = \frac{H'}{H^*_m} \qquad \text{(V)}$$

$$\chi = \frac{m_c}{m} \times 100\% \qquad \text{(VI)}$$

Gel-Permeations-Chromatographie (GPC): Das Molekulargewicht wurde per Hochtemperatur-GPC bei der Firma Polymer Standards Services (PSS), Mainz, bestimmt. Die Analyse wurde bei 150 °C in 1,2,4-Trichlorbenzol als Eluenten bei einer Flussrate von 1,0 ml/min durchgeführt. Säule: PSS Polyolefin 10 $\mu$m, LinXL, ID 8,0 mm $\times$ 300 mm. Als Kalibrierstandard wurden Polystyrolproben bekannten Molekulargewichts verwendet.

Beschreibung der Experimente:

Beispiel 1:

Copolymerisation von Ethylen und CO mit einem *in situ*-generierten Katalysator bei einem Ethylen-CO-Verhältnis von 98:2

In einem 300 mL Druckreaktor aus Edelstahl mit Glaseinsatz wurden 95 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 13 bar beaufschlagt. Das Gemisch wurde dann unter Rühren bei 500 U/min auf 110 °C erhitzt, wobei der Gesamtdruck im Reaktor auf 19 bar anstieg. Nach Erreichen der Reaktionstemperatur wurden 11,2 mg (0,05 mmol) $Pd(OAc)_2$ und 30,2 mg (0,075 mmol) Ligand P^O in 5 mL Dichlormethan gelöst und über eine Druckbürette mit Hilfe eines Gasgemischs aus 98% Ethylen und 2% CO in das Reaktionsgemisch injiziert, wobei der Gesamtdruck auf 44 bar anstieg. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 15.5 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 33 g eines Copolymers aus Ethylen und CO erhalten. Damit wurde eine TON von 660 $g/mmol_{Pd}$ und eine TOF von 36,7 $g/(mmol_{Pd} \times h)$ erreicht.
Schmelzpunkt: 125,8 °C
Viskosität (160,9 °C): 0,804 Pa·s
IR: $\nu$(CO) = 1718 $cm^{-1}$
$^1$H-NMR (300 MHz, $C_6D_5Cl$, 95 °C): $\delta$ = 0.74-0.96 (8.327 H), 0.96-1.18 (7.498 H), 1.18-1.43 (640.12 H), 1.43-1.64 (13.85 H), 1.91-2.07 (2.906 H), 2.12-2.33 (8.461 H), 2.39-2.59 (1.966 H), 4.85-5.04 (2.155 H), 5.34-5.45 (0.196 H), 5.67-5.86 (0.999 H) ppm.

Die molaren Anteile der Monomere im Produkt betrugen 98,5 mol-% Ethylen und 1,5 mol-% CO.

Der alternierende Anteil betrug 18.9 mol-%.

Aus dem Anteil an Doppelbindungen errechnet sich aus dem $^1$H-NMR-Spektrum ein durchschnittliches Molekulargewicht von $M_n$ = 4150 g/mol.

Der Verzweigungsgrad betrug VG = 4,21 Verzweigungen pro 1000 C-Atome.

Die Teilkristallinität betrug $\chi$ = 20.1 %.

Vergleichsbeispiel 1:

Copolymerisation von Ethylen und CO mit einem *in situ*-generierten Katalysator bei einem Ethylen-CO-Verhältnis von 98:2 im Batch-Verfahren

In einem 300 mL Druckreaktor aus Edelstahl mit Glaseinsatz wurden 95 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 13 bar beaufschlagt. Das Gemisch wurde dann unter Rühren bei 500 U/min auf 110 °C erhitzt, wobei der Gesamtdruck im Reaktor auf 19 bar anstieg. Nach Erreichen der Reaktionstemperatur wurden 11,2 mg (0,05 mmol) $Pd(OAc)_2$ und 30,2 mg (0,075 mmol) Ligand P^O in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt, die Gaszufuhr geschlossen und das Reaktionsgemisch 18 h bei 110 °C gerührt. Nach abgeschlossener Reaktionszeit wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 14,1 g eines Copolymers aus Ethylen und CO erhalten. Damit wurde eine TON von 282 $g/mmol_{Pd}$

und eine TOF von 15,7 g/(mmol$_{Pd}$×h) erreicht.
Schmelzpunkt: 123,9 °C
Viskosität (160 °C): 1,278 Pa·s
IR: ν(CO) = 1711 cm$^{-1}$
$^1$H-NMR (300 MHz, $C_6D_5Cl$, 95 °C): δ = 0.71-0.94 (5.641 H), 0.94-1.41 (507.53 H), 1.41-1.66 (12.62 H), 1.87-2.10 (2.891 H), 2.10-2.42 (7.606 H), 2.42-2.68 (3.75 H), 4.77-5.02 (2.111 H), 5.28-5.44 (0.291 H), 5.63-5.85 (1.000 H) ppm.

Die molaren Anteile der Monomere im Produkt betrugen 97.95 mol-% Ethylen und 2.05 mol-% CO.

Der alternierende Anteil betrug 33,0 mol-%.

Aus dem Anteil an Doppelbindungen errechnet sich aus dem $^1$H-NMR-Spektrum ein durchschnittliches Molekulargewicht von $M_n$ = 3234 g/mol.

Der Verzweigungsgrad betrug VG = 1,92 Verzweigungen pro 1000 C-Atome.

*Vergleich:*

Aus dem Vergleichsbeispiel geht klar hervor, dass bei der Durchführung der Reaktion im Batch-Verfahren, also ohne Nachführen von Ethylen und CO im Reaktionsverlauf, unter anderweitig gleichen Reaktionsbedingungen ein Ethylen-CO-Polymer mit einem deutlich höheren alternierenden Anteil gebildet wird. Im Vergleich zu Beispiel 1 (TOF = 36,7 g/(mmol$_{Pd}$×h)) wurde in diesem Vergleichsbeispiel eine deutlich niedrigere TOF (15,7 g/(mmol$_{Pd}$×h)) erzielt.

Beispiel 2:

Copolymerisation von Ethylen und CO mit einem *in situ*-generierten Katalysator bei einem Ethylen-CO-Verhältnis 90:10

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 90% Ethylen und 10% CO auf einen Gesamtdruck von 15 bar beaufschlagt. Das Gemisch wurde dann unter Rühren bei 500 U/min auf 110 °C erhitzt, wobei der Gesamtdruck im Reaktor auf 21,6 bar anstieg. Nach Erreichen der Reaktionstemperatur wurden der Druck mit einem Gemisch aus 90% Ethylen und 10% CO auf 28,8 bar eingestellt. Anschließend wurden 11,3 mg (0,05 mmol) $Pd(OAc)_2$ und 30,3 mg (0,075 mmol) Ligand P^O in 5 mL Dichlormethan gelöst und über eine Druckbürette mit Hilfe eines Gasgemischs aus 90% Ethylen und 10% CO in das Reaktionsgemisch injiziert, der Gesamtdruck mit einem Gasgemisch aus 90% Ethylen und 10% CO auf 50 bar eingestellt und das Reaktionsgemisch bei konstantem Druck, der durch Nachführung des Gasgemisches geregelt wurde, 17,3 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 9,2 g eines Copolymers aus Ethylen und CO erhalten. Damit wurde eine TON von 184 g/mmol$_{Pd}$ und eine TOF von 10,6 g/(mmol$_{Pd}$×h) erreicht.
Schmelzpunkt: 126.7 °C
Viskosität (160,2 °C): 0.74 Pa.s
IR: ν(CO) = 1711 cm$^{-1}$
$^1$H-NMR (400 MHz, $C_6D_5Cl$, 95 °C): δ = 0.61-1.04 (10.87 H),1.04-1.18 (4.979 H), 1.18-1.43 (395.69 H), 1.43-1.73 (17.50 H), 1.89-2.10 (3.237 H), 2.10-2.36 (13.47 H), 2.37-2.68 (3.965 H), 4.85-5.03 (2.061 H), 5.29-5.48 (0.811 H), 5.66-5.85 (1.000 H) ppm.

Die molaren Anteile der Monomere im Produkt betrugen 96,3 mol-% Ethylen und 3,7 mol-% CO.

Der alternierende Anteil betrug 22,7 mol-%.

Aus dem Anteil an Doppelbindungen errechnet sich aus dem $^1$H-NMR-Spektrum ein durchschnittliches Molekulargewicht von $M_n$ = 2296 g/mol.

Der Verzweigungsgrad betrug VG = 7,57 Verzweigungen pro 1000 C-Atome.

Die Teilkristallinität betrug $\chi$ = 7,4%.

Vergleichsbeispiel 2:

Copolymerisation von Ethylen und CO mit einem *in situ*-generiertem Katalysator bei einem erniedrigten Ethylen-CO-Verhältnis von 80:20

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 80% Ethylen und 20% CO auf einen Gesamtdruck von 14,9 bar beaufschlagt. Das Gemisch wurde dann unter Rühren bei 500 U/min auf 110 °C erhitzt. Nach Erreichen der Reaktionstemperatur wurden der Druck mit einem Gemisch aus 80% Ethylen

und 20% CO auf 27,7 bar eingestellt. Anschließend wurden 11,1 mg (0,05 mmol) $Pd(OAc)_2$ und 31,1 mg (0,077 mmol) Ligand P^O in 5 mL Dichlormethan gelöst und über eine Druckbürette mit Hilfe eines Gasgemischs aus 80% Ethylen und 20% CO in das Reaktionsgemisch injiziert, der Gesamtdruck mit einem Gasgemisch aus 80% Ethylen und 20% CO auf 50 bar eingestellt und das Reaktionsgemisch bei konstantem Druck, der durch Nachführung des Gasgemisches geregelt wurde, 18 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 11,8 g eines Copolymers aus Ethylen und CO erhalten. Damit wurde eine TON von 236 $g/mmol_{Pd}$ und eine TOF von 13,1 $g/(mmol_{Pd} \times h)$ erreicht.

Das Produkt lag unterhalb 180 °C nicht geschmolzen vor.
IR: $\nu(CO)$ = 1707 $cm^{-1}$
$^1$H-NMR (300 MHz, $C_6D_4Cl_2$, 95 °C): $\delta$ = 0.61-0.87 (7.165 H), 0.87-1.00 (5.734 H), 1.00-1.31 (266.34 H), 1.31-1.61 (66.55 H), 1.96-2.29 (62.03 H), 2.29-2.55 (19.28 H), 4.74-4.98 (1.608 H), 5.59-5.80 (1.000 H) ppm.

Die molaren Anteile der Monomere im Produkt betrugen 84,1 mol-% Ethylen und 15,9 mol-% CO.

Der alternierende Anteil betrug 23,7 mol-%.

Aus dem Anteil an Doppelbindungen errechnet sich aus dem $^1$H-NMR-Spektrum ein durchschnittliches Molekulargewicht von $M_n$ = 4449 g/mol.

Der Verzweigungsgrad betrug VG = 6,20 Verzweigungen pro 1000 C-Atome.

Die Teilkristallinität betrug $\chi$ = 8,5%.

*Vergleich:*

Das Vergleichsbeispiel zeigt, dass bei einem Ethylen-CO-Verhältnis von 80:20 gegenüber Beispiel 1 (Ethylen:CO = 98:2) und Beispiel 2 (Ethylen:CO = 90:10), ein Ethylen-CO-Copolymer mit wesentlich höherem CO-Gehalt (15,9 mol-% gegenüber 1,5 mol-% in Beispiel 1 und 3.7 mol-% in Beispiel 2) erhalten wurde. Ferner zeigt das Vergleichsbeispiel, dass bei einem Ethylen-CO-Verhältnis $\geq$ 80:20 Ethylen-CO-Copolymere mit einem Schmelzpunkt oberhalb 140 °C erhalten werden.

<u>Beispiel 3:</u>

Copolymerisation von Ethylen und CO mit einem *in situ*-generierten Katalysator bei einem Ethylen-CO-Verhältnis von 98:2 und verkürzter Reaktionszeit

In einem 300 mL Druckreaktor aus Edelstahl mit Glaseinsatz wurden 95 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 13 bar beaufschlagt. Das Gemisch wurde dann unter Rühren bei 500 U/min auf 110 °C erhitzt. Bei Erreichen einer Temperatur von 100 °C wurde der Druck mit einem Gemisch aus 98% Ethylen und 2% CO auf 33 bar eingestellt. Nach Erreichen einer Temperatur von 110 °C wurden 11,2 mg (0,05 mmol) $Pd(OAc)_2$ und 30,4 mg (0,076 mmol) Ligand P^O in 5 mL Dichlormethan gelöst und über eine Druckbürette mit Hilfe eines Gasgemischs aus 98% Ethylen und 2% CO in das Reaktionsgemisch injiziert. Der Gesamtdruck wurde mit einem Gasgemisch aus 98% Ethylen und 2% CO auf 51 bar eingestellt und das Reaktionsgemisch bei konstantem Druck, der durch Nachführung des Gasgemisches geregelt wurde, 2,6 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 5,57 g eines Copolymers aus Ethylen und CO erhalten. Damit wurde eine TON von 111 $g/mmol_{Pd}$ und eine TOF von 42,8 $g/(mmol_{Pd} \times h)$ erzielt.
Schmelzpunkt: 120.5 °C
Viskosität (160,1 °C): 1,134 Pa·s
IR: $\nu(CO)$ = 1715 $cm^{-1}$
$^1$H-NMR (300 MHz, $C_6D_5Cl$, 95 °C): $\delta$ = 0.79-0.95 (10.51 H), 1.04-1.15 (7.653 H), 1.17-1.47 (1024.52 H), 1.48-1.68 (29.83 H), 1.89-2.08 (4.635 H), 2.15-2.30 (20.20 H), 2.40-2.64 (7.380 H) , 4.87-5.03 (2.449 H), 5.35-5.43 (0.742 H), 5.70-5.87 (1.001 H) ppm.

Die molaren Anteile der Monomere im Produkt betrugen 97,6 mol-% Ethylen und 2,4 mol-% CO.

Der alternierende Anteil betrug 26,8 mol-%.

Aus dem Anteil an Doppelbindungen errechnet sich aus dem $^1$H-NMR-Spektrum ein durchschnittliches Molekulargewicht von $M_n$ = 4986 g/mol.

Der Verzweigungsgrad betrug VG = 2,70 Verzweigungen pro 1000 C-Atome.

Die Teilkristallinität betrug $\chi$ = 17,1 %.

Beispiel 4:

Copolymerisation von Ethylen und CO mit einem *in situ*-generierten Katalysator bei einem Ethylen-CO-Verhältnis von 98:2 und geringerer Katalysatorkonzentration

In einem 300 mL Druckreaktor aus Edelstahl mit Glaseinsatz wurden 95 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 15 bar beaufschlagt. Das Gemisch wurde dann unter Rühren bei 500 U/min auf 110 °C erhitzt, wobei ein Gesamtdruck von 20 bar erreicht wurde. Nach Erreichen der Reaktionstemperatur wurde der Druck mit einem Gemisch aus 98% Ethylen und 2% CO auf 36 bar eingestellt. Dann wurden 8,3 mg (0,037 mmol) $Pd(OAc)_2$ und 22,4 mg (0,056 mmol) Ligand P^O in 5 mL Dichlormethan gelöst und über eine Druckbürette mit Hilfe eines Gasgemischs aus 98% Ethylen und 2% CO in das Reaktionsgemisch injiziert. Der Gesamtdruck wurde mit einem Gasgemisch aus 98% Ethylen und 2% CO auf 50 bar eingestellt und das Reaktionsgemisch bei konstantem Druck, der durch Nachführung des Gasgemisches geregelt wurde, 2 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 5,6 g eines Copolymers aus Ethylen und CO erhalten. Damit wurde eine TON von 151 $g/mmol_{Pd}$ und eine TOF von 75,7 $g/(mmol_{Pd} \times h)$ erzielt.
Schmelzpunkt: 121.8°C
Viskosität (160,5 °C): 0,9428 Pa·s
IR: v(CO) = 1712 $cm^{-1}$
$^1$H-NMR (300 MHz, $C_6D_5Cl$, 95 °C): $\delta$ = 0.81-1.00 (12.87 H), 1.00-1.18 (8.628 H), 1.2-1.51 (1076.51 H), 1.55-1.65 (35.46 H), 1.96-2.02 (4.396 H), 2.18-2.275 (22.14 H), 2.493 (6.538 H) 4.88-4.99 (2.452 H), 5.395 (0.863 H), 5.72-5.81 (1.001 H) ppm.

Die molaren Anteile der Monomere im Produkt betrugen 97,6 mol-% Ethylen und 2,4 mol-% CO.

Der alternierende Anteil betrug 22,8 mol-%.

Aus dem Anteil an Doppelbindungen errechnet sich aus dem $^1$H-NMR-Spektrum ein durchschnittliches Molekulargewicht von $M_n$ = 5066 g/mol.

Der Verzweigungsgrad betrug VG = 3,67 Verzweigungen pro 1000 C-Atome.

Die Teilkristallinität betrug $\chi$ = 46,9%.

Beispiel 5:

Copolymerisation von Ethylen und CO mit einem *in situ*-generierten Katalysator bei einem Ethylen-CO-Verhältnis von 98:2 und einer Reaktionstemperatur von 130 °C

In einem 300 mL Druckreaktor aus Edelstahl mit Glaseinsatz wurden 95 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 15 bar beaufschlagt. Das Gemisch wurde dann unter Rühren bei 500 U/min auf 130 °C erhitzt. Nach Erreichen der Reaktionstemperatur wurde der Druck mit einem Gemisch aus 98% Ethylen und 2% CO auf 36 bar eingestellt. Anschließend wurden 11,0 mg (0,049 mmol) $Pd(OAc)_2$ und 29,9 mg (0,074 mmol) Ligand P^O in 5 mL Dichlormethan gelöst und über eine Druckbürette mit Hilfe eines Gasgemischs aus 98% Ethylen und 2% CO in das Reaktionsgemisch injiziert, der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 130 °C gerührt. Nach 2,3 Stunden wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 9,2 g eines Copolymers aus Ethylen und CO erhalten. Damit wurde eine TON von 188 $g/mmol_{Pd}$ und eine TOF von 81,6 $g/(mmol_{Pd} \times h)$ erreicht.
Schmelzpunkt: 120,7 °C
Viskosität (160,8 °C): 0,1662 Pa·s
IR: v(CO) = 1715 $cm^{-1}$
$^1$H-NMR (300 MHz, $C_6D_5Cl$, 95 °C): $\delta$ = 0.65-0.96 (9.259 H), 0.91-1.11 (4.445 H, 0.92-1.45 (477.67 H), 1.48-1.61 (14.76 H), 1.90-2.05 (3.372 H), 2.18-2.32 (9.798 H), 2.43-2.58 (2.403) 4.85-5.008 (2.253 H), 5.38-5.42 (0.372 H), 5.75-5.82 (1.000 H) ppm.

Die molaren Anteile der Monomere im Produkt betrugen 97,7 mol-% Ethylen und 2,3 mol-% CO.

Der alternierende Anteil betrug 19,7 mol-%.

Aus dem Anteil an Doppelbindungen errechnet sich aus dem $^1$H-NMR-Spektrum ein durchschnittliches Molekulargewicht von $M_n$ = 2867 g/mol.

Der Verzweigungsgrad betrug VG = 5,91 Verzweigungen pro 1000 C-Atome.

Die Teilkristallinität betrug $\chi$ = 12,3%.

Beispiel 6:

Copolymerisation von Ethylen und CO mit einem *in situ*-generierten Katalysator bei einem Ethylen-CO-Verhältnis von 98:2 und einer Reaktionstemperatur von 120 °C

In einem 300 mL Druckreaktor aus Edelstahl mit Glaseinsatz wurden 95 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 13 bar beaufschlagt. Das Gemisch wurde dann unter Rühren bei 500 U/min auf 120 °C erhitzt. Nach Erreichen der Reaktionstemperatur wurde der Druck mit einem Gemisch aus 98% Ethylen und 2% CO auf 35 bar eingestellt. Anschließend wurden 11,2 mg (0,05 mmol) $Pd(OAc)_2$ und 30,4 mg (0,076 mmol) Ligand P^O in 5 mL Dichlormethan gelöst und über eine Druckbürette mit Hilfe eines Gasgemischs aus 98% Ethylen und 2% CO in das Reaktionsgemisch injiziert, der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 120 °C gerührt. Nach 2,5 Stunden wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 9,5 g eines Copolymers aus Ethylen und CO erhalten. Damit wurde eine TON von 190 g/$mmol_{Pd}$ und eine TOF von 76,0 g/($mmol_{Pd}\times$h) erreicht.
Schmelzpunkt: 119.3 °C
Viskosität (160,6 °C): 0,5199 Pa·s
IR: v(CO) = 1712 $cm^{-1}$
$^1$H-NMR (300 MHz, $C_6D_5Cl$, 95 °C): $\delta$ = 0.78-0.90 (8.415 H), 1.02-1.15 (5.614 H), 1.18-1.45 (691.10 H), 1.51-1.63 (21.61 H), 1.91-2.05 (3.963 H), 2.15-2.30 (16.07 H), 2.43-2.62 (6.375) 4.83-5.008 (2.364 H), 5.39-5.41 (0.671 H), 5.68-5.83 (1.001 H) ppm.

Die molaren Anteile der Monomere im Produkt betrugen 97,1 mol-% Ethylen und 2,9 mol-% CO.

Der alternierende Anteil betrug 28,4 mol-%.

Aus dem Anteil an Doppelbindungen errechnet sich aus dem $^1$H-NMR-Spektrum ein durchschnittliches Molekulargewicht von $M_n$ = 3596 g/mol.

Der Verzweigungsgrad betrug VG = 2,44 Verzweigungen pro 1000 C-Atome.

Die Teilkristallinität betrug $\chi$ = 17,0%.

Beispiel 7:

Copolymerisation von Ethylen und CO mit einem *in situ*-generierten Katalysator bei einem Ethylen-CO-Verhältnis von 98:2 und einer Reaktionstemperatur von 105 °C

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 15 bar beaufschlagt. Das Gemisch wurde dann unter Rühren bei 500 U/min auf 105 °C erhitzt. Anschließend wurden 11,5 mg (0,051 mmol) $Pd(OAc)_2$ und 30,2 mg (0,075 mmol) Ligand P^O in 5 mL Dichlormethan gelöst und über eine Druckbürette mit Hilfe eines Gasgemischs aus 98% Ethylen und 2% CO in das Reaktionsgemisch injiziert, der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 105 °C gerührt. Nach 3,5 Stunden wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 18,1 g eines Copolymers aus Ethylen und CO erhalten. Damit wurde eine TON von 355 g/$mmol_{Pd}$ und eine TOF von 101 g/($mmol_{Pd}\times$h) erreicht.
Schmelzpunkt: 120.8 °C
Viskosität (160 °C): 2,692 Pa·s
IR: v(CO) = 1716 $cm^{-1}$
$^1$H-NMR (300 MHz, $C_6D_5Cl$, 95 °C): $\delta$ = 0.81-0.95 (7.645 H), 1.00-1.10 (5.060 H), 1.14-1.45 (721.54 H), 1.48-1.65 (26.36 H), 1.83-2.08 (3.979 H), 2.15-2.30 (16.38 H), 2.40-2.65 (4.713 H , 4.85-4.95 (1.316 H), 4.98-5.03 (0.574 H), 5.30-5.45 (0.868 H), 5.70-5.86 (0.999 H) ppm.

Die molaren Anteile der Monomere im Produkt betrugen 97,4 mol-% Ethylen und 2,6 mol-% CO.

Der alternierende Anteil betrug 22,34 mol-%.

Aus dem Anteil an Doppelbindungen errechnet sich aus dem $^{1}$H-NMR-Spektrum ein durchschnittliches Molekulargewicht von $M_n$ = 4114 g/mol.

Der Verzweigungsgrad betrug VG = 1,81 Verzweigungen pro 1000 C-Atome.

Die Teilkristallinität betrug $\chi$ = 3,9%.

Beispiel 8:

Copolymerisation von Ethylen und CO mit einem *in situ*-generierten Katalysator bei einem Ethylen-CO-Verhältnis von 98:2 und einer Reaktionstemperatur von 100 °C

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 16 bar beaufschlagt. Das Gemisch wurde dann unter Rühren bei 500 U/min auf 100 °C erhitzt. Anschließend wurden 11,3 mg (0,05 mmol) $Pd(OAc)_2$ und 30,4 mg (0,076 mmol) Ligand P^O in 5 mL Dichlormethan gelöst und über eine Druckbürette mit Hilfe eines Gasgemischs aus 98% Ethylen und 2% CO in das Reaktionsgemisch injiziert, der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 100 °C gerührt. Nach 3,0 Stunden wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 9,9 g eines Copolymers aus Ethylen und CO erhalten. Damit wurde eine TON von 198 g/$mmol_{Pd}$ und eine TOF von 66 g/($mmol_{Pd} \times h$) erreicht.
Schmelzpunkt: 122,2 °C
Viskosität (160,5 °C): 6,979 Pa·s
IR: $\nu$(CO) = 1707 $cm^{-1}$
$^{1}$H-NMR (300 MHz, $C_6D_5Cl$, 95 °C): $\delta$ = 0.97-1.05 (1.294 H), 1.21-1.29 (1.094 H), 1.30-1.58 (198.67 H), 1.60-1.78 (4.950 H), 1.91-2.05 (3.079 H), 2.05-2.20 (0.682 H), 2.28-2.42 (3.882 H), 2.52-2.69 (0.999 H), 4.98-5.16 (0.306 H), 5.45-5.59 (0.0503 H), 5.84-5.96 (1.105 H) ppm.

Die molaren Anteile der Monomere im Produkt betrugen 97,8 mol-% Ethylen und 2,2 mol-% CO.

Der alternierende Anteil betrug 20,7 mol-%.

Aus dem Anteil an Doppelbindungen errechnet sich aus dem $^{1}$H-NMR-Spektrum ein durchschnittliches Molekulargewicht von $M_n$ = 8647 g/mol.

Der Verzweigungsgrad betrug VG = 2,08 Verzweigungen pro 1000 C-Atome.

Die Teilkristallinität betrug $\chi$ = 18,0%.

Beispiel 9:

Copolymerisation von Ethylen und CO mit einem *in situ*-generierten Katalysator bei einem Ethylen-CO-Verhältnis von 98:2 und einer Reaktionstemperatur von 95 °C

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 16 bar beaufschlagt. Das Gemisch wurde dann unter Rühren bei 500 U/min auf 95 °C erhitzt. Anschließend wurden 11,3 mg (0,05 mmol) $Pd(OAc)_2$ und 30,3 mg (0,075 mmol) Ligand P^O in 5 mL Dichlormethan gelöst und über eine Druckbürette mit Hilfe eines Gasgemischs aus 98% Ethylen und 2% CO in das Reaktionsgemisch injiziert, der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 95 °C gerührt. Nach 3 Stunden wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 5,8 g eines Copolymers aus Ethylen und CO erhalten. Damit wurde eine TON von 116 g/$mmol_{Pd}$ und eine TOF von 38,7 g/($mmol_{Pd} \times h$) erreicht.
Schmelzpunkt: 126.0 °C
Viskosität (160 °C): 13.24 Pa·s
IR: $\nu$(CO) = 1713 $cm^{-1}$
$^{1}$H-NMR (300 MHz, $C_6D_5Cl$, 95 °C): $\delta$ = 0.79-0.95 (22.32 H), 1.05-1.18 (19.27 H), 1.19-1.42 (3920.66 H), 1.47-1.62 (145.19 H), 1.78-1.83 (55.57 H), 1.90-2.05 (15.36 H), 2.10-2.30 (118.82 H), 2.41-2.62 (42.76 H), 4.85-4.98 (2.514 H), 4.99-5.02 (0.762 H), 5.38-5.44 (2.443 H), 5.75-5.81 (1.011 H) ppm.

Die molaren Anteile der Monomere im Produkt betrugen 96,4 mol-% Ethylen und 3,6 mol-% CO.

Der alternierende Anteil betrug 26,5 mol-%.

Aus dem Anteil an Doppelbindungen errechnet sich aus dem $^1$H-NMR-Spektrum ein durchschnittliches Molekulargewicht von $M_n$ = 12572 g/mol.

Der Verzweigungsgrad betrug VG = 1,68 Verzweigungen pro 1000 C-Atome.

Beispiel 10:

Copolymerisation von Ethylen und CO mit einem *in situ*-generierten Katalysator bei einem Ethylen-CO-Verhältnis von 98:2 und einem Gesamtdruck von 30 bar

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 5 bar beaufschlagt. Das Gemisch wurde dann unter Rühren bei 500 U/min auf 110 °C erhitzt. Anschließend wurden 11,2 mg (0,05 mmol) $Pd(OAc)_2$ und 30,2 mg (0,075 mmol) Ligand P^O in 5 mL Dichlormethan gelöst und über eine Druckbürette mit Hilfe eines Gasgemischs aus 98% Ethylen und 2% CO in das Reaktionsgemisch injiziert, der Gesamtdruck mit einem Gasgemisch aus 98% Ethylen und 2% CO auf 30 bar eingestellt und das Reaktionsgemisch bei konstantem Druck, der durch Nachführung des Gasgemisches geregelt wurde, bei 110 °C gerührt. Nach 1,75 Stunden wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 8,3 g eines Copolymers aus Ethylen und CO erhalten. Damit wurde eine TON von 166 g/$mmol_{Pd}$ und eine TOF von 94,9 g/($mmol_{Pd}$×h) erreicht.
Schmelzpunkt: 122.09 °C
Viskosität (160 °C): 1.302 Pa·s
IR: ν(CO) = 1716 $cm^{-1}$
$^1$H-NMR (300 MHz, $C_6D_5Cl$, 95 °C): δ = 0.88-0.95 (15.64 H), 1.03-1.54 (916.36 H), 1.90-2.05 (4.260 H), 2.22-2.26 (9.891 H), 2.41-2.62 (1.976 H), 4.85-5.01 (2.501 H), 5.38-5.44 (0.845 H), 5.75-5.81 (1.001 H) ppm.

Die molaren Anteile der Monomere im Produkt betrugen 98,8 mol-% Ethylen und 1.2 mol-% CO.

Der alternierende Anteil betrug 16,7 mol-%.

Aus dem Anteil an Doppelbindungen errechnet sich aus dem $^1$H-NMR-Spektrum ein durchschnittliches Molekulargewicht von $M_n$ = 4035 g/mol.

Der Verzweigungsgrad betrug VG = 6,47 Verzweigungen pro 1000 C-Atome.

Beispiel 11:

Copolymerisation von Ethylen und CO mit einem *in situ*-generierten Katalysator bei einem Ethylen-CO-Verhältnis von 98:2 und einem Gesamtdruck von 40 bar

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 10 bar beaufschlagt. Das Gemisch wurde dann unter Rühren bei 500 U/min auf 110 °C erhitzt. Anschließend wurden 11,3 mg (0,05 mmol) $Pd(OAc)_2$ und 31,1 mg (0,077 mmol) Ligand P^O in 5 mL Dichlormethan gelöst und über eine Druckbürette mit Hilfe eines Gasgemischs aus 98% Ethylen und 2% CO in das Reaktionsgemisch injiziert, der Gesamtdruck mit einem Gasgemisch aus 98% Ethylen und 2% CO auf 40 bar eingestellt und das Reaktionsgemisch bei konstantem Druck, der durch Nachführung des Gasgemisches geregelt wurde, bei 110 °C gerührt. Nach 2,15 Stunden wurde der Reaktor auf 25 °C heruntergekühlt und der Druck vorsichtig abgelassen. Das erhaltene Reaktionsgemisch vorsichtig filtriert und der feste Rückstand mit Dichlormethan gewaschen. Anschließend wurde der Rückstand 16 Stunden am Hochvakuum bei ca. 0,02 mbar getrocknet.

Es wurden 8,1 g eines Copolymers aus Ethylen und CO erhalten. Damit wurde eine TON von 162 g/$mmol_{Pd}$ und eine TOF von 75,3 g/($mmol_{Pd}$×h) erreicht.
Schmelzpunkt 125,8 °C
Viskosität (160 °C): 1.608 Pa·s
IR: ν(CO) = 1714 $cm^{-1}$
$^1$H-NMR (300 MHz, $C_6D_5Cl$, 95 °C): δ = 0.82-1.11 (9.270 H), 1.17-1.29 (12.06 H), 1.30-1.60 (731.93 H), 1.62-1.83 (86.33 H), 2.10-2.20 (8.255 H), 2.27-2.48 (22.01 H), 2.58-2.75 (9.205 H), 5.00-5.20 (2.00 H), 5.49-5.60 (0.640 H), 5.82-6.10 (0.999 H) ppm.

Die molaren Anteile der Monomere im Produkt betrugen 96,6 mol-% Ethylen und 3,4 mol-% CO.

Der alternierende Anteil betrug 29,5 mol-%.

Aus dem Anteil an Doppelbindungen errechnet sich aus dem $^1$H-NMR-Spektrum ein durchschnittliches Molekulargewicht von $M_n$ = 4847 g/mol.

Der Verzweigungsgrad betrug VG = 3,17 Verzweigungen pro 1000 C-Atome.

In den Beispielen 1 bis 11 wurden TOF erzielt, die um mindestens einen Faktor 3 größer sind, als die in der Literatur mit dem gleichen Katalysator-System für das Ethylen-CO-Copolymer mit dem geringsten CO-Gehalt erzielten TOF (2,82 g/($mmol_{Pd}\times h$) für ein Ethylen-CO-Copolymer mit 6 mol-% CO in Organometallics 2009, 6994).

Beispiel 12:

Copolymerisation von Ethylen und CO mit einem Komplex-Katalysator bei einem Ethylen-CO-Verhältnis von 98:2

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 15 bar beaufschlagt. Das Gemisch wurde dann unter Rühren bei 500 U/min auf 110 °C erhitzt, wobei der Gesamtdruck im Reaktor auf 22,5 bar anstieg. Nach Erreichen der Reaktionstemperatur wurden 10,7 mg (0,016 mmol) [Pd(dcpOEt)(P^O)] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 1,6 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 3,7 g eines Copolymers aus Ethylen und CO erhalten. Damit wurde eine TON von 231 g/$mmol_{Pd}$ und eine TOF von 145 g/($mmol_{Pd}\times h$) erreicht.
Schmelzpunkt: 125,67 °C
Viskosität (160,1 °C): 0,5622 Pa·s
IR: $\nu$(CO) = 1711 $cm^{-1}$
$^1$H-NMR (300 MHz, $C_6D_5Cl$, 95 °C): $\delta$ = 0.78-1.03 (10.65 H), 1.03-1.16 (7.978 H), 1.16-1.45 (861.87 H), 1.45-1.69 (37.35 H), 1.88-2.07 (3.712 H), 2.07-2.37 (23.87 H), 2.39-2.67 (8.734 H), 4.86-5.05 (2.038 H), 5.31-5.51 (0.810 H), 5.67-5.86 (1.000 H) ppm.

Die molaren Anteile der Monomere im Produkt betrugen 96,7 mol-% Ethylen und 3,3 mol-% CO.

Der alternierende Anteil betrug 26,8 mol-%.

Aus dem Anteil an Doppelbindungen errechnet sich aus dem $^1$H-NMR-Spektrum ein durchschnittliches Molekulargewicht von $M_n$ = 4870 g/mol.

Der Verzweigungsgrad betrug VG = 3,47 Verzweigungen pro 1000 C-Atome.

Beispiel 13:

Copolymerisation von Ethylen und CO mit einem Komplex-Katalysator bei einem Ethylen-CO-Verhältnis von 98:2

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 15 bar beaufschlagt. Das Gemisch wurde dann unter Rühren bei 500 U/min auf 110 °C erhitzt. Nach Erreichen der Reaktionstemperatur wurden 7,7 mg (0,011 mmol) [Pd(dcpOEt)(P^O)] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 2,4 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 5,57 g eines Copolymers aus Ethylen und CO erhalten. Damit wurde eine TON von 506 g/$mmol_{Pd}$ und eine TOF von 211 g/($mmol_{Pd}\times h$) erreicht.
Schmelzpunkt: 119,6 °C
Viskosität (160 °C): 0,432
IR: v(CO) = 1716 $cm^{-1}$
$^1$H-NMR (300 MHz, $C_6D_5Cl$, 95 °C): $\delta$ = 0.78-0.99 (17.85 H), 1.00-1.10 (9.256 H), 1.16-1.44 (1504.53 H), 1.46-1.65 (43.10 H), 1.80-2.03 (5.775 H), 2.10-2.04 (26.88 H), 2.41-2.58 (8.586 H) , 4.83-4.95 (2.169 H), 4.98-5.04 (0.780 H), 5.33-5.43 (0.889 H), 5.63-5.90 (1.002 H) ppm.

Die molaren Anteile der Monomere im Produkt betrugen 97,9 mol-% Ethylen und 2,1 mol-% CO.

Der alternierende Anteil betrug 24,2 mol-%.

Aus dem Anteil an Doppelbindungen errechnet sich aus dem $^1$H-NMR-Spektrum ein durchschnittliches Molekulargewicht von $M_n$ = 7579 g/mol.

Der Verzweigungsgrad betrug VG = 4,80 Verzweigungen pro 1000 C-Atome.

Beispiel 14:

Copolymerisation von Ethylen und CO mit einem Komplex-Katalysator bei einem Ethylen-CO-Verhältnis von 98:2

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 16 bar beaufschlagt. Das Gemisch wurde dann unter Rühren bei 500 U/min auf 110 °C erhitzt. Nach Erreichen der Reaktionstemperatur wurden 5,7 mg (0,0083 mmol) [Pd(dcpOEt)(P^O)] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 3,2 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 4,15 g eines Copolymers aus Ethylen und CO erhalten. Damit wurde eine TON von 500 g/$mmol_{Pd}$ und eine TOF von 156 g/($mmol_{Pd} \times h$) erreicht.
Schmelzpunkt: 126.2 °C
Viskosität (160 °C): 1,188 Pa·s
IR: ν(CO) = 1715 $cm^{-1}$
$^1$H-NMR (300 MHz, $C_6D_5Cl$, 95 °C): $\delta$ = 0.80-0.95 (7.645 H), 1.01-1.10 (5.060 H), 1.12-1.45 (721.54 H), 1.48-1.66 (26.36 H), 1.83-2.08 (3.979 H), 2.12-2.34 (16.38 H), 2.39-2.62 (4.713 H), 4.84-4.95 (1.316 H), 4.96-5.02 (0.574 H), 5.30-5.48 (0.868 H), 5.70-5.87 (0.999 H) ppm.

Die molaren Anteile der Monomere im Produkt betrugen 97,4 mol-% Ethylen und 2,6 mol-% CO.

Der alternierende Anteil betrug 22,3 mol-%.

Aus dem Anteil an Doppelbindungen errechnet sich aus dem $^1$H-NMR-Spektrum ein durchschnittliches Molekulargewicht von $M_n$ = 4114 g/mol.

Der Verzweigungsgrad betrug VG = 1,81 Verzweigungen pro 1000 C-Atome.

Die Teilkristallinität betrug $\chi$ = 3,9%.

Aus dem Vergleich mit der Literatur (Organometallics 2005(24), 2755) ergibt sich, dass mit dem gleichen Katalysatorsystem in den Beispielen 12 bis 14 TOF erzielt werden, die größer sind als die in der Literatur für das Ethylen-CO-Copolymer mit dem geringsten CO-Gehalt erzielten TOF (134 g/($mmol_{Pd} \times h$) für ein Ethylen-CO-Copolymer mit 35,2 mol-% CO), obwohl die Katalysatorkonzentration um eine Größenordnung geringer ist als in der Literatur (0,072 bis 0,13 mmol/L in Beispiel 12 bis 14 gegenüber 1,15 mmol/L in der Literatur.

Beispiel 15:

Copolymerisation von Ethylen und CO mit einem Komplex-Katalysator bei einem Ethylen-CO-Verhältnis von 98:2

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 15 bar beaufschlagt. Das Gemisch wurde dann unter Rühren bei 500 U/min auf 110 °C erhitzt. Nach Erreichen der Reaktionstemperatur wurden 4,6 mg (0,0067 mmol) [Pd(dcpOEt)(P^O)] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 4,75 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 1,65 g eines Copolymers aus Ethylen und CO erhalten. Damit wurde eine TON von 246 g/$mmol_{Pd}$ und eine TOF von 51,8 g/($mmol_{Pd} \times h$) erreicht.
Schmelzpunkt: 116,5 °C

Viskosität (160,1 °C): 1.623 Pa·s
IR: ν(CO) = 1705 $cm^{-1}$
$^{1}$H-NMR (300 MHz, $C_6D_5Cl$, 95 °C): δ = 0.79-0.92 (8.240 H), 1.01-1.13 (6.725 H), 1.14-1.44 (1000.90 H), 1.45-1.65 (51.39 H), 1.75-1.85 (4.161 H), 1.90-2.09 (4.553 H), 2.13-2.30 (37.41 H) , 2.41-2.60 (7.441 H), 4.81-4.96 (1.785 H), 4.97-5.02 (0.645 H), 5.30-5.46 (0.448 H), 5.70-5.85 (1.001 H) ppm.

Die molaren Anteile der Monomere im Produkt betrugen 96,1 mol-% Ethylen und 3,9 mol-% CO.

Der alternierende Anteil betrug 16,6 mol-%.

Aus dem Anteil an Doppelbindungen errechnet sich aus dem $^{1}$H-NMR-Spektrum ein durchschnittliches Molekulargewicht von $M_n$ = 5689 g/mol.

Der Verzweigungsgrad betrug VG = 1,87 Verzweigungen pro 1000 C-Atome.

Beispiel 16:

Copolymerisation von Ethylen und CO mit einem Komplex-Katalysator bei einem Ethylen-CO-Verhältnis von 98:2

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit einem Gemisch aus 98% Ethylen und 2% CO auf einen Gesamtdruck von 15 bar beaufschlagt. Das Gemisch wurde dann unter Rühren bei 500 U/min auf 110 °C erhitzt. Nach Erreichen der Reaktionstemperatur wurden 3,6 mg (0,0052 mmol) [Pd(dcpOEt)(P^O)] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 17,6 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 1,14 g eines Copolymers aus Ethylen und CO erhalten. Damit wurde eine TON von 219 g/$mmol_{Pd}$ und eine TOF von 12,5 g/($mmol_{Pd}$×h) erreicht.
Schmelzpunkt: 119,8 °C
Viskosität (160 °C): 1,227 Pa·s
IR: ν(CO) = 1711 $cm^{-1}$
$^{1}$H-NMR (300 MHz, $C_6D_5Cl$, 95 °C): δ = 0.78-0.95 (9.439 H), 1.04-1.15 (7.831 H), 1.16-1.45 (1145.55 H), 1.48-1.70 (68.99 H), 1.88-2.08 (5.439 H), 2.10-2.38 (53.11 H), 2.40-2.65 (11.27 H) , 4.83-4.95 (2.020 H), 4.99-5.04 (0.732 H), 5.70-5.90 (1.002 H) ppm.

Die molaren Anteile der Monomere im Produkt betrugen 95,3 mol-% Ethylen und 4,7 mol-% CO.

Der alternierende Anteil betrug 17,5 mol-%.

Aus dem Anteil an Doppelbindungen errechnet sich aus dem $^{1}$H-NMR-Spektrum ein durchschnittliches Molekulargewicht von $M_n$ = 9488 g/mol.

Der Verzweigungsgrad betrug VG = 3,12 Verzweigungen pro 1000 C-Atome.

Beispiel 17:

Homopolymerisation von Ethylen und nachfolgende Copolymerisation von Ethylen und CO mit einem Komplex-Katalysator bei einem Ethylen-CO-Verhältnis von 98:2 (s. hierzu auch Beispiel 12)

In einem 300 mL Druckreaktor aus Edelstahl mit Glaseinsatz wurden 100 mL Dichlormethan vorgelegt und der Reaktor mit Argon geflutet. Anschließend wurde der Reaktor bei Raumtemperatur mit Ethylen auf einen Gesamtdruck von 11 bar beaufschlagt. Das Gemisch wurde dann unter Rühren bei 1000 U/min auf 110 °C erhitzt. Nach Erreichen der Reaktionstemperatur wurde der Druck mit Ethylen auf 40 bar eingestellt. Anschließend wurden 10,9 mg (0,016 mmol) [Pd(dcpOEt)(P^O)] in 5 mL Dichlormethan gelöst und über eine Druckbürette mit Hilfe eines Überdruckes an Ethylen in das Reaktionsgemisch injiziert. Anschließend wurde der Gesamtdruck mit einem Ethylen auf 50 bar eingestellt und das Reaktionsgemisch bei konstantem Druck, der durch Nachführung von Ethylen geregelt wurde, bei 110 °C gerührt, bis 800 Normliter Ethylen zudosiert waren (10 min). Dann wurde das Gas gewechselt und zur Wahrung der Druckkonstanz ein Gemisch aus 98% Ethylen und 2% CO zugeführt. Nach weiteren 90 Minuten wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 11,2 g eines Copolymers aus Ethylen und CO erhalten. Damit wurde eine TON von 700 g/$mmol_{Pd}$ und eine TOF von 420 g/($mmol_{Pd}$×h) erreicht.

Schmelzpunkt: 125,5
Viskosität (160 °C): 1.192 Pa·s s
IR: $\nu$(CO) = 1718 $cm^{-1}$
$^1$H-NMR (300 MHz, $C_6D_5Cl$, 95 °C): $\delta$ = 0,77-0,99 (7,354 H), 0,99-1,18 (6,404 H), 1,18-1,48 (657,81 H), 1,48-1,71 (10,41 H), 1,90-2,11 (2,847 H), 2,15-2,33 (1,567 H), 2,44-2,53 (0,221 H), 5,86-5,05 (2,036 H), 5,34-5,46 (0,293 H), 5,68-5,87 (1,000 H) ppm.

Die molaren Anteile der Monomere im Produkt betrugen 99,7 mol-% Ethylen und 0,3 mol-% CO.

Der alternierende Anteil betrug 12,4 mol-%.

Aus dem Anteil an Doppelbindungen errechnet sich aus dem $^1$H-NMR-Spektrum ein durchschnittliches Molekulargewicht von $M_n$ = 4158 g/mol.

Der Verzweigungsgrad betrug VG = 3,30 Verzweigungen pro 1000 C-Atome.

Im Vergleich zu Beispiel 12 wurde in diesem Beispiel durch Beaufschlagung des Reaktors mit Ethylen anstatt eines Ethylen-CO-Gemisches zu Beginn der Reaktion eine fast 3-mal höhere TOF erreicht (420 gegenüber 145 g/($mmol_{Pd} \times h$) in Beispiel 12).

Beispiel 18:

Terpolymerisation von Ethylen, CO und 1-Hexen mit einem Komplex-Katalysator

In einem 300 mL Druckreaktor aus Edelstahl mit Glaseinsatz wurde ein Gemisch aus 50 mL Dichlormethan und 50 ml frisch destilliertem 1-Hexen vorgelegt und der Reaktor mit Argon geflutet. Anschließend wurde der Reaktor bei Raumtemperatur mit einem Gemisch aus 98% Ethylen und 2% CO auf einen Gesamtdruck von 10,2 bar beaufschlagt. Das Gemisch wurde dann unter Rühren bei 500 U/min auf 110 °C erhitzt, wobei der Gesamtdruck im Reaktor auf 17,4 bar anstieg. Nach Erreichen der Reaktionstemperatur wurde der Druck mit einem Gemisch aus 98% Ethylen und 2% CO auf 30,3 bar eingestellt. Dann wurden 14,4 mg (0,02 mmol) [Pd(dcpOEt)(P^O)] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 2 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 22,5 g eines Terpolymers aus Ethylen, CO und 1-Hexen erhalten.
Schmelzpunkt: 109,91 °C.
Der Schmelzbereich beginnt bereits bei < 25 °C.
Viskosität in Pa·s (Temperatur):0.613 (110 °C), 0.493 (120 °C), 0.404(130 °C), 0.332 (140 °C), 0.273 (150 °C), 0.229 (160 °C).
IR: $\nu$(CO) = 1715 $cm^{-1}$
NMR (300 MHz, $C_6D_5Cl$, 95 °C): $\delta$ = 0.76-1.02 (35.48 H), 1.02-1.45 (964.501 H), 1.45-1.70 (19.38 H), 1.89-2.10 (7.871 H), 2.14-2.34 (9.878 H), 2.40-2.60 (2.293 H), 4,75 (bs, 0.453 H), 4.86-5.03 (2.464 H), 5.32-5.47 (1.628 H), 5.69-5.86 (1.000 H) ppm.

Die molaren Anteile der Monomere im Produkt betrugen 94,5 mol-% Ethylen, 4,3 mol-% 1-Hexen und 1,3 mol-% CO.

Der alternierende Anteil betrug 18,8 mol-%.

Aus dem Anteil an Doppelbindungen errechnet sich aus dem $^1$H-NMR-Spektrum ein durchschnittliches Molekulargewicht von $M_n$ = 3256 g/mol.

Der Verzweigungsgrad betrug VG = 16,63 Verzweigungen pro 1000 C-Atome.

Laut GPC (150 °C, 1,2,4-Trichlorbenzol, kalibriert gegen Polystyrol) weist das Produkt ein zahlenmittleres Molekulargewicht $M_n$ = 3770 g/mol und einen Polydispersitätsindex PDI = 2,53 auf.

Beispiel 19:

Terpolymerisation von Ethylen, CO und 1-Hexen mit einem Komplex-Katalysator

In einem 300 mL Druckreaktor aus Edelstahl mit Glaseinsatz wurde ein Gemisch aus 50 mL Dichlormethan und 50 ml frisch destilliertem 1-Hexen vorgelegt und der Reaktor mit Argon geflutet. Anschließend wurde der Reaktor bei Raumtemperatur mit einem Gemisch aus 98% Ethylen und 2% CO auf einen Gesamtdruck von 10 bar beaufschlagt. Das Gemisch wurde dann unter Rühren bei 500 U/min auf 110 °C erhitzt. Nach Erreichen der Reaktionstemperatur

wurde der Druck mit einem Gemisch aus 98% Ethylen und 2% CO auf 30 bar eingestellt. Dann wurden 14,3 mg (0,021 mmol) [Pd(dcpOEt)L] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 110 °C gerührt, bis 2,5 Normliter des Gasgemisches zudosiert waren (0,42 Stunden). Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 3,8 g eines Terpolymers aus Ethylen, CO und 1-Hexen erhalten.
Schmelzpunkt: 112,43 °C
Der Schmelzbereich beginnt bereits bei < 50 °C.
Viskosität in Pa·s (Temperatur):0.875 (110 °C), 0.685 (120 °C), 0.546 (130 °C), 0.443 (140 °C), 0.363 (150 °C), 0.301 (160 °C).
IR: $\nu$(CO) = 1711 $cm^{-1}$
NMR (300 MHz, $C_6D_5Cl$, 95 °C): $\delta$ = 0.76-1.02 (26,48 H), 1.02-1.45 (767,337 H), 1.45-1.70 (24,91 H), 1.89-2.10 (5,845 H), 2.14-2.34 (15,47 H), 2.40-2.60 (7,287 H), 4,75 (bs, 0,343 H), 4.86-5.03 (2,074 H), 5.32-5.47 (1,315 H), 5.69-5.86 (0,999 H) ppm.

Die molaren Anteile der Monomere im Produkt betrugen 93,5 mol-% Ethylen, 3,7 mol-% 1-Hexen und 2,8 mol-% CO.

Der alternierende Anteil betrug 32,0 mol-%.

Aus dem Anteil an Doppelbindungen errechnet sich aus dem $^1$H-NMR-Spektrum ein durchschnittliches Molekulargewicht von $M_n$ = 3282 g/mol.

Der Verzweigungsgrad betrug VG = 14,60 Verzweigungen pro 1000 C-Atome.

Laut GPC (150 °C, 1,2,4-Trichlorbenzol, kalibriert gegen Polystyrol) weist das Produkt ein zahlenmittleres Molekulargewicht $M_n$ = 4580 g/mol und einen Polydispersitätsindex PDI = 2,41 auf.

Beispiel 20:

Terpolymerisation von Ethylen, CO und Styrol mit einem Komplex-Katalysator

In einem 300 mL Druckreaktor aus Edelstahl mit Glaseinsatz wurde ein Gemisch aus 50 mL Dichlormethan und 50 ml Styrol vorgelegt und der Reaktor mit Argon geflutet. Anschließend wurde der Reaktor bei Raumtemperatur mit einem Gemisch aus 98% Ethylen und 2% CO auf einen Gesamtdruck von 12 bar beaufschlagt. Das Gemisch wurde dann unter Rühren bei 500 U/min auf 110 °C erhitzt. Nach Erreichen der Reaktionstemperatur wurde der Druck mit einem Gemisch aus 98% Ethylen und 2% CO auf 30 bar eingestellt. Dann wurden 14,4 mg (0,021 mmol) [Pd(dcpOEt)L] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, 2 Stunden bei 110 °C gerührt. Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Anschließend wurde der Rückstand bei 60 °C 24 Stunden am Hochvakuum bei ca. 0,02 mbar getrocknet.

Es wurden 15,4 g eines Terpolymers aus Ethylen, CO und Styrol erhalten.
IR: v(CO) = 1717 $cm^{-1}$
NMR (300 MHz, $C_6D_5Cl$, 95 °C): $\delta$ = 0,68-1,06 (4,997 H), 1,06-1,49 (336,70 H), 1,49-1,86 (23,88 H), 1,93-2,15 (3,492 H), 2,15-2,41 (10,83 H), 2,63-2,78 (4,795 H), 2,78-2,89 (1,200 H), 4,92-5,11 (1,000 H), 5,43-5,75 (0,227 H), 5,75-5,91 (0,459 H), 6,08-6,30 (1,226 H), 6,30-6,48 (1,304 H), 6,84-6,89 (6,568 H), 6,89-7,58 (37,77 H) ppm.

Die molaren Anteile der Monomere im Produkt betrugen 93,7 mol-% Ethylen, 2,5 mol-% Styrol und 3,8 mol-% CO.

Der alternierende Anteil betrug 30,7 mol-%.

Aus dem Anteil an Doppelbindungen errechnet sich aus dem $^1$H-NMR-Spektrum ein durchschnittliches Molekulargewicht von $M_n$ = 1590 g/mol.

Der Verzweigungsgrad betrug VG = 3,88 Verzweigungen pro 1000 C-Atome.
Schmelzpunkt: 112,54 °C
Der Schmelzbereich beginnt bereits bei < 60 °C.
Viskosität in Pa·s (Temperatur):1.269 (110 °C), 1.021 (120 °C), 0.8791 (130 °C), 0.7344 (140 °C), 0.6906 (150 °C), 0.5585 (160 °C).

Laut GPC (150 °C, 1,2,4-Trichlorbenzol, kalibriert gegen Polystyrol) weist das Produkt ein zahlenmittleres Molekulargewicht $M_n$ = 3870 g/mol und einen Polydispersitätsindex PDI = 1,45 auf.

Beispiel 21:

Terpolymerisation von Ethylen, CO und Styrol mit einem Komplex-Katalysator

In einem 300 mL Druckreaktor aus Edelstahl mit Glaseinsatz wurde ein Gemisch aus 50 mL Dichlormethan und 50 ml Styrol vorgelegt und der Reaktor mit Argon geflutet. Anschließend wurde der Reaktor bei Raumtemperatur mit einem Gemisch aus 98% Ethylen und 2% CO auf einen Gesamtdruck von 11,7 bar beaufschlagt. Das Gemisch wurde dann unter Rühren bei 500 U/min auf 110 °C erhitzt. Nach Erreichen der Reaktionstemperatur wurde der Druck mit einem Gemisch aus 98% Ethylen und 2% CO auf 30 bar eingestellt. Dann wurden 14,5 mg (0,021 mmol) [Pd(dcpOEt)L] in 5 mL Dichlormethan gelöst und über eine Druckbürette mit Hilfe eines Gasgemischs aus 98% Ethylen und 2% CO in das Reaktionsgemisch injiziert. Anschließend wurde der Gesamtdruck mit einem Gasgemisch aus 98% Ethylen und 2% CO auf 50 bar eingestellt und das Reaktionsgemisch bei konstantem Druck, der durch Nachführung des Gasgemisches geregelt wurde, bei 110 °C gerührt, bis 2,5 Normliter des Gasgemisches zudosiert waren (0,65 Stunden). Nach abgeschlossener Reaktionszeit wurde der Reaktor auf 25 °C heruntergekühlt und der Druck vorsichtig abgelassen. Das erhaltene Reaktionsgemisch wurde vorsichtig filtriert und der feste Rückstand mit Dichlormethan gewaschen. Die flüchtigen Bestandteile des Filtrats wurden destillativ unter vermindertem Druck entfernt. Es wurden 3.5 g eines Terpolymers aus Ethylen, CO und Styrol erhalten.
Schmelzpunkt: 112,68 °C
Der Schmelzbereich beginnt bereits bei < 60 °C.
Viskosität in Pa·s (Temperatur):0.6902 (110 °C), 0.573 (120 °C), 0.4704 (130 °C), 0.3942 (140 °C), 0.3303 (150 °C), 0.323 (160 °C).
IR: v(CO) = 1716 $cm^{-1}$
NMR (300 MHz, $C_6D_5Cl$, 95 °C): $\delta$ = 0,73-1,03 (5,347 H), 1,03-1,52 (447,19 H), 1,52-1,82 (26,68 H), 1,94-2,13 (2,564 H), 2,13-2,41 (15,48 H), 2,41-2,61 (4,241 H), 2,61-2,77 (1,264 H), 4,90-5,09 (0,999 H), 5,42-5,50 (0,0863 H), 5,73-5,91 (0,467 H), 6,11-6,27 (1,120 H), 6,32-6,47 (1,171 H), 6,47-6,82 (3,522 H), 6,89-7,58 (37,04 H) ppm.
Die molaren Anteile der Monomere im Produkt betrugen 94,5 mol-% Ethylen, 1,8 mol-% Styrol und 3,7 mol-% CO.
Der alternierende Anteil betrug 21,5 mol-%.
Aus dem Anteil an Doppelbindungen errechnet sich aus dem $^1$H-NMR-Spektrum ein durchschnittliches Molekulargewicht von $M_n$ = 2261 g/mol.
Der Verzweigungsgrad betrug VG = 4,71 Verzweigungen pro 1000 C-Atome.
Laut GPC (150 °C, 1,2,4-Trichlorbenzol, kalibriert gegen Polystyrol) weist das Produkt ein zahlenmittleres Molekulargewicht $M_n$ = 3420 g/mol und einen Polydispersitätsindex PDI = 1,63 auf.

*Vergleich:*

Die Beispiele 3 bis 21 geben weitere Ausführungsformen für das erfindungsgemäße Verfahren.

## Patentansprüche

1. Verfahren zur Herstellung von Olefin-CO-Copolymeren, umfassend die Schritte:

    - Bereitstellen eines Reaktors;
    - Beaufschlagen des Reaktors mit einem gasförmigen Olefin und mit CO, so dass im Reaktor ein erster Druck p1 herrscht;
    - Reaktion von Olefin mit CO in Gegenwart eines Katalysators im Reaktor;

    **dadurch gekennzeichnet, dass**
    vor der Reaktion im Reaktor entweder kein CO vorliegt oder das Volumenverhältnis von gasförmigem Olefin zu CO ≥ 90:10 ist
    und während der Reaktion zumindest zeitweise gasförmiges Olefin und CO zudosiert werden, wobei das Volumenverhältnis des zudosierten gasförmigen Olefins zu zudosiertem CO hierbei im zeitlichen Mittel ≥ 90:10 ist.

2. Verfahren gemäß Anspruch 1, wobei während der Reaktion der Druck im Reaktor im Bereich von ≥ 80% von p1 bis

≤ 120% von p1 liegt.

**3.** Verfahren gemäß Anspruch 1 oder 2, wobei der während der Reaktion auftretende Druckverlust durch Nachführen von gasförmigem Olefin und CO in den Reaktor ausgeglichen wird und wobei das Volumenverhältnis des nachgeführten gasförmigen Olefins zum nachgeführten CO im zeitlichen Mittel ≥ 90:10 beträgt.

**4.** Verfahren gemäß einem oder mehreren der Ansprüche 1 bis 3, wobei der Katalysator Palladium umfasst.

**5.** Verfahren gemäß einem oder mehreren der Ansprüche 1 bis 4, wobei der Katalysator einen anionischen, zweizähnigen Liganden enthält, welcher ein über mindestens zwei und maximal vier weitere Atome mit einem Sauerstoff-Anion verbrücktes Phosphoratom enthält.

**6.** Verfahren gemäß einem oder mehreren der Ansprüche 1 bis 5, wobei die Reaktion des Olefins mit CO in Gegenwart eines weiteren Olefins stattfindet.

**7.** Verfahren gemäß einem oder mehreren der Ansprüche 1 bis 6, wobei vor der Reaktion des Olefins mit CO eine Homopolymerisation des Olefins oder eine Copolymerisation von mehreren Olefinen im Reaktor durchgeführt wird.

**8.** Verfahren gemäß einem oder mehreren der Ansprüche 1 bis 7, wobei der Druck p1 ≥20 bar bis ≤ 300 bar beträgt.

**9.** Verfahren gemäß einem oder mehreren der Ansprüche 1 bis 8, wobei die Reaktion bei einer Temperatur von ≥ 90 °C bis ≤ 150 °C durchgeführt wird.

**10.** Verfahren gemäß einem oder mehreren der Ansprüche 1 bis 9, wobei der Katalysator oder ein Gemisch der Katalysator-Komponenten bei einer Temperatur von ≥ 90 °C bis ≤ 150 °C in den Reaktor enthaltend gasförmiges Olefin oder ein Gemisch aus gasförmigem Olefin und CO injiziert wird.

**11.** Olefin-CO-Copolymer, erhältlich durch ein Verfahren gemäß einem oder mehreren der Ansprüche 1 bis 10, **dadurch gekennzeichnet, dass** der Gehalt an in das Copolymer eingebautem CO ≤ 5 mol-% bezogen auf alle eingebauten Monomere beträgt und das Copolymer einen alternierenden Anteil von ≤ 32,5 mol-% aufweist.

**12.** Olefin-CO-Copolymer gemäß Anspruch 11 mit einem zahlenmittleren Molekulargewicht $M_n$ von ≤ 15000 g/mol.

**13.** Polyolverbindung, erhältlich durch Reduktion eines Olefin-CO-Copolymers gemäß Anspruch 11 oder 12.

**14.** Polyamin- und/oder Polyamin-Polyalkoholverbindung, erhältlich durch reduktive Aminierung eines Olefin-CO-Copolymers gemäß Anspruch 11 oder 12.

**15.** Verwendung von Olefin-CO-Copolymeren gemäß Anspruch 11 oder 12, von Polyolverbindungen gemäß Anspruch 13 und/oder von Polyamin- und/oder Polyamin-Polyalkoholverbindungen gemäß Anspruch 14 als Polymeradditive und/oder zur Herstellung von Polyurethan- und/oder Polyharnstoffpolymeren.

Europäisches Patentamt
European Patent Office
Office européen des brevets

# EUROPÄISCHER RECHERCHENBERICHT

Nummer der Anmeldung
EP 14 15 8593

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2 495 286 A (BRUBAKER MERLIN M) 24. Januar 1950 (1950-01-24) * Ansprüche 1-15 * * Ansprüche 7,8 * * Spalte 15, Zeile 34 - Spalte 16, Zeile 20 * ----- | 1-3,6-15 | INV. C08G67/02 |
| X,D | BETTUCCI L. ET AL: "Ligand effects in the non-alternating CO-ethylene copolymerisation by palladium (ii) catalysts", DALTON TRANSACTIONS, 2007, Seiten 5590-5602, XP002711785, * Tabelle 3 * ----- | 1-5,7-12 | |
| X,D | LUO.R. ET AL: "Palladium catalysed nonalternating vopolymerisation of ethene and carbon monoxide", ORGANOMETALLICS, Bd. 28, 2009, Seiten 6994-7000, XP002711782, * Abbildungen 2,3 * ----- | 1-5,7-12 | RECHERCHIERTE SACHGEBIETE (IPC) |
| X | HEARLEY A K ET AL: "NEW SINGLE-SITE PALLADIUM CATALYSTS FOR THE NONALTERNATING COPOLYMERIZATION OF ETHYLENE AND CARBON MONOXIDE", ORGANOMETALLICS, ACS, WASHINGTON, DC, US, Bd. 24, Nr. 11, 23. Mai 2005 (2005-05-23), Seiten 2755-2763, XP001228745, ISSN: 0276-7333, DOI: 10.1021/OM0490785 * Tabelle 1 * ----- -/-- | 1-5,7-12 | C08G |

Der vorliegende Recherchenbericht wurde für alle Patentansprüche erstellt

1

| Recherchenort | Abschlußdatum der Recherche | Prüfer |
|---|---|---|
| Den Haag | 10. Juli 2014 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 14 15 8593

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BOVEY F A ET AL: "CARBON-13 NMR STUDY OF THE SOLID-STATE PHOTOCHEMISTRY OF POLY(ETHYLENE-CO-CARBON MONOXIDE)", MACROMOLECULES, AMERICAN CHEMICAL SOCIETY, WASHINGTON, DC; US, Bd. 21, Nr. 4, 1. April 1988 (1988-04-01), Seiten 938-944, XP000000418, ISSN: 0024-9297, DOI: 10.1021/MA00182A016 * Seite 938 * ----- | 11 | |
| A | EP 0 485 035 A2 (SHELL INT RESEARCH [NL]) 13. Mai 1992 (1992-05-13) * Beispiele 1-5 * ----- | 1-15 | |
| A | JP H11 35676 A (KURARAY CO) 9. Februar 1999 (1999-02-09) * Zusammenfassung * ----- | 1-15 | |
| | | | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| Den Haag | 10. Juli 2014 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 14 15 8593

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-07-2014

| Im Recherchenbericht angeführtes Patentdokument | Datum der Veröffentlichung | Mitglied(er) der Patentfamilie | Datum der Veröffentlichung |
|---|---|---|---|
| US 2495286 A | 24-01-1950 | KEINE | |
| EP 0485035 A2 | 13-05-1992 | AU 646101 B2 | 10-02-1994 |
| | | AU 8708091 A | 14-05-1992 |
| | | CA 2055016 A1 | 09-05-1992 |
| | | CN 1061417 A | 27-05-1992 |
| | | EP 0485035 A2 | 13-05-1992 |
| | | JP 3290680 B2 | 10-06-2002 |
| | | JP H04272925 A | 29-09-1992 |
| | | SG 76459 A1 | 21-11-2000 |
| | | US 5169927 A | 08-12-1992 |
| | | ZA 9108803 A | 29-07-1992 |
| JP H1135676 A | 09-02-1999 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0213671 A
- EP 0632084 A
- US 2495286 A
- GB 1522942 A
- US 20080242895 A
- JP 1149828 A
- JP 11035676 A
- JP 11035677 A
- EP 0791615 A1
- JP 2232228 A
- EP 830932 A2
- EP 0735081 A2
- JP 10081745 A
- JP 9235370 A

### In der Beschreibung aufgeführte Nicht-Patentliteratur

- *Chem. Commun.,* 2002, 964
- *Organometallics,* 2009, vol. 24, 6994
- *Organometallics,* 2005, vol. 24, 2755
- *Dalton Trans.,* 2008, 4537
- *J. Polymer Science,* 1998, 889
- *Recent Research Developments in Polymer Science,* 1999, 355
- *Organometallics,* 2005, 2754
- *Organometallics,* 2009, 6994